# Europäisches Patentamt

## European Patent Office

## Office européen des brevets

(19)

(11) Publication number: **0 085 563**
**B1**

(12) **EUROPEAN PATENT SPECIFICATION**

(45) Date of publication of patent specification: 22.07.87

(51) Int. Cl.⁴: **B 01 J 8/42** // B01D46/38

(21) Application number: **83300478.1**

(22) Date of filing: **31.01.83**

(54) A continuous transverse flow magnetically stabilised fluidised bed.

(30) Priority: 02.02.82 US 345046
02.02.82 US 345094
02.02.82 US 345096

(43) Date of publication of application:
10.08.83 Bulletin 83/32

(45) Publication of the grant of the patent:
22.07.87 Bulletin 87/30

(84) Designated Contracting States:
BE CH DE FR GB IT LI LU NL SE

(56) References cited:
FR-A-2 121 722
US-A-2 656 258
US-A-3 987 967
US-A-4 296 080

(73) Proprietor: **Exxon Research and Engineering Company**
**P.O.Box 390 180 Park Avenue**
**Florham Park New Jersey 07932 (US)**

(72) Inventor: **Coulaloglou, Costas Anastasios**
**15 Wisteria Terrace**
**Morristown New Jersey (US)**
Inventor: **Siegell, Jeffrey Howard**
**32 Mohawk Trail**
**Westfield New Jersey (US)**
Inventor: **Cahn, Robert Paul**
**799 Ridgewood Road**
**Millburn New Jersey (US)**

(74) Representative: **Somers, Harold Arnold et al**
**ESSO Engineering (Europe) Ltd. Patents & Licences Apex Tower High Street**
**New Malden Surrey KT3 4DJ (GB)**

## Description

The present invention relates to a process for the continuous transverse flow of fluidized particles in magnetically stabilized fluidized beds. More particularly, the invention relates to improving the uniformity of particulate flow in the magnetically stabilized fluidized bed during a continuous transverse flow process.

Recently, R. E. Rosenweig reported a number of features relating to magnetically stabilized fluidized magnetizable particles and provided a systematic interpretation of the phenomenon [*Science, 204:* 57—60 (1979); *Ind. Eng. Chem. Fundam., 18,* (3): 260—269 (1979); *A. I. Ch. E. Symp. Ser., 77* (205), pp. 8—16 (1981), Lucchesi et al, *Proc. of the 10th World Petroleum Congress,* Bucharest, Romania, 1979, 4, Heyden and Sons, Philadelphia, Pa. (1979) and U.S. Patents 4,115,927 and 4,136,016]. These publications noted the quiescent, fluid-like state of the magnetically stabilized fluidized bed (MSB), particularly a bed totally free of bubbles or pulsations when subjected to a uniform magnetic field applied colinearly with the flow of the fluidizing gas. Bed stabilization results in a non-bubbling fluid state having a wide range of operating velocities (denoted as superficial fluid velocities) which range between (a) a lower limit defined by the normal minimum fluidization superficial fluid velocity ($U_{mf}$) required to fluidize the bed in the absence of the applied magnetic field, i.e. magnetic effects, and (b) an upper limit defined by the superficial fluid velocity ($U_T$) required to cause time-varying fluctuations of pressure difference through the stabilized bed during continuous fluidization in the presence of the applied magnetic field. In U.S. Patent 4,115,927, Rosensweig discloses that the stably fluidized solids resemble a liquid such that the solids transport is facilitated while the pressure drop is limited to that of a fluidized bed. Also the backmixing normally associated with conventional fluidized bed process is absent.

More recently, U.S. Patent 4,247,987, the Belgian counterpart of which was granted on March 29, 1981 as Belgian Patent 885,390, described the counter-current operation of a magnetically stabilized bed with continuous solids addition and removal at or substantially near the locus of transition between the bubbling and stabilized regions of the bed in order to increase bed fluidity.

The use of fluid jets to move solid objects and fluidized powders has been disclosed previously. See, for example, U.S. Patents 3,131,974; 3,180,688, and 3,304,619; Futer, R. E. "Conveying Solids with Cooperating Series of Air Jets," *ASME Symposium on Flow of Solids,* Boston, Massachusetts, October 20—23, 1968 (Paper No. 68-MH-31); Shinohara, K. and Tanaka, T., *J. Chem. Eng. of Japan, 5,* 279 (1972); and Woodcook, C. R. and Mason, J. S., "Air Gravity Conveying: Fluidize your Powder and Let it Slide," *International Powder and Bulk Solids Handling and Processing Conf. Proceedings,* Philadelphia, Pa., May 15—17 (1979). In the devices disclosed, the jets are directed such that the entering fluid has an appreciable component of velocity in the direction of desired solids movement. As such, momentum is transferred to the solids upon contact with the entering fluid. When used in conventional fluidized beds, the fluid not only imparts motion to the solids, but also provides the fluidizing means.

In accordance with the present invention there is provided a process for contacting a fluid with solids under fluidized conditions wherein a bed of suspended magnetizable particles which is stabilized by a non-alternating magnetic means having a strength sufficient to suppress solids backmixing is contacted in a vessel with a fluidizing fluid which passes through the bed in an ascending manner and the particles are thereafter removed from contact with the fluid, the process being characterized by passing at least a portion of the particles in the bed in a direction transverse (i.e., non-parallel) to the flow of the fluidizing fluid.

The transverse velocity profile as well as the height profile of the particles comprising the bed will have greater uniformity by properly adjusting the superficial fluid velocity, the strength of the magnetic stabilizing means, the bed tilt angle and the average solids velocity. Improvements in the uniformity of the solids velocity profile can also be obtained using a properly designed weir in the flow path of the bed particles.

In one preferred embodiment of the invention, the fluidity of the bed particles is increased by operating the bed at or substantially near the locus of transition between the bubbling and stabilized regions of the bed. As used herein, the expression "substantially near the locus of transition" refers to maintaining the fluidity ratio (or the difference between the transition velocity and the operating velocity to the difference between the transition velocity and the normal minimum fluidization velocity) between −0.1 and +0.5. The fluidity ratio may be expressed mathematically as:

$$\frac{U_T - U_{op}}{U_T - U_{mf}}$$

where $U_T$ is the superficial fluid velocity required to cause time-varying fluctuations of pressure difference through the bed in the presence of a magnetic stabilizing means, $U_{mf}$ is the normal minimum fluidization superficial fluid velocity required to fluidize the bed of magnetizable particles in the absence of magnetic effects, and $U_{op}$ is the actual operating superficial fluid velocity.

In another preferred embodiment the entering fluidizing fluid enters the bed with a substantial velocity component in the direction of solids motion (i.e., the transverse flow direction). The transverse momentum of the fluidizing fluid entering the bed is transferred to the solids causing the transverse flow of the bed, the amount of transverse momentum transferred being dependent upon various operating conditions such as the angle at which said fluid is introduced to the bed, the velocity of the fluidizing fluid, the transverse flow rate of the solids and the like. Preferably, the fluidizing fluid entering the bed is oriented in the direction of solids flow by passage through a distribution means supporting the bed.

The fluidized bed is stabilized by a magnetic means (i.e., a magnetic stabilizing means) which should be of sufficient strength to suppress particle backmixing within the bed but below that which would cause excessive particle-to-particle attractive forces. Similarly, the superficial velocity of the fluidizing fluid should be in excess of the normal minimum fluidization superficial velocity in the absence of magnetic effects, but below the superficial velocity which will cause solids backmixing.

In the drawings:

Figure 1 illustrates a simplified diagram of the top and side view of the transverse flow magnetically stabilized fluidized bed experimental apparatus.

Figure 2 illustrates the flow of solids and the angles associated therewith in transverse flow magnetically stabilized fluidized beds.

Figure 3 illustrates the effect of bed tilt angle on the average bed height in transverse flow magnetically stabilized fluidized beds.

Figure 4 illustrates the effect of an applied magnetic field on the average bed height in transverse flow magnetically stabilized fluidized beds.

Figure 5 illustrates the effect of the ratio of fluidization velocity to transition velocity on average bed height in transverse flow magnetically stabilized beds.

Figure 6 illustrates the effect of the ratio of fluidization velocity to transition velocity on the average solids velocity in transverse flow magnetically stabilized beds.

Figure 7 illustrates the effect of bed tilt angle on bed height profile in transverse flow magnetically stabilized fluidized beds.

Figure 8 illustrates the effect of applied magnetic field on bed height profile in transverse flow magnetically stabilized fluidized beds.

Figure 9 illustrates the effect of applied magnetic field and superficial gas velocity on the angle of solids flow in transverse flow magnetically stabilized fluidized beds.

Figure 10 illustrates that the effective viscosity of a magnetically stabilized bed correlates as a power law fluid.

Figure 11 illustrates solids velocity profiles at low applied magnetic field in transverse flow magnetically stabilized fluidized beds.

Figure 12 illustrates solids velocity profiles at higher applied magnetic field and at different bed tilt angles in transverse flow magnetically stabilized fluidized beds.

Figure 13 illustrates the effect of superficial fluid velocity on the solids velocity profiles in transverse flow magnetically stabilized fluidized beds.

Figure 14 illustrates the effect of increased weir height on the solids velocity profile in transverse flow magnetically stabilized beds.

Figure 15 illustrates the effect of solids circulation on transition superficial velocity in transverse flow magnetically stabilized fluidized beds.

Figure 16 illustrates the effect of applied magnetic field and superficial gas velocity on solids transverse flow velocity in transverse flow magnetically stabilized fluidized beds.

Figure 17 illustrates the effect of applied magnetif field and superficial gas velocity on the angle of solids flow in transverse flow magnetically stabilized fluidized beds.

Figure 18 illustrates increased solids fluidity in transverse flow magnetically stabilized beds near the transition locus.

Figures 19a and 19b illustrate the use of fluidizing fluid to induce solids transport in a rotating transvere flow magnetically stabilized fluidized bed.

Figures 20a, 20b and 20c illustrate the use of fluidizing fluid to induce self circulation of solids in a transverse flow magnetically stabilized fluidized bed.

Figures 21a, 21b and 21c illustrate an experimental apparatus employed to study the transport of solids in a fluid induced transverse flow magnetically stabilized fluidized bed.

Figure 22 illustrates an experimental apparatus employed to study the transport of solids in a fluid induced transverse flow magnetically stabilized fluidized bed.

Figure 23 illustrates an experimental apparatus employed to study the transport of solids in a fluid induced transverse flow magnetically stabilized fluidized bed.

Figures 24a and 24b illustrate the effect of magnetic field on solids flow pattern in a fluid induced transverse flow magnetically stabilized fluidized bed.

Figures 25a and 25b illustrate the effect of superficial gas velocity on solids flow pattern in a fluid induced transverse flow magnetically stabilized fluidized bed.

Figure 26 illustrates the effect of magnetic field the gas velocity on solids flow rate in a fluid induced transverse flow magnetically stabilized fluidized bed.

Figure 27 illustrates the effect of bed height on solids flow pattern in a fluid induced transverse flow magnetically stabilized fluidized bed.

3

Figure 28 illustrates the effect of magnetic field and bed height on solids flow rate in a fluid induced transverse flow magnetically stabilized fluidized bed.

Figure 29 illustrates the effect of bed height on solids flow rate in a fluid induced transverse flow magnetically stabilized fluidized bed.

Figure 30 illustrates an experimental apparatus employed to study the transport of solids in a fluid induced self-circulating transverse flow magnetically stabilized fluidized bed.

In its broadest embodiment, the present invention relates to the transverse flow of solids or particles comprising a magnetically stabilized fluidized bed. More specifically, the present invention concerns a method of improving the uniformity of the solids velocity profile and bed height profile of a stabilized fluidized bed of magnetizable particles during the transverse flow contacting of said particles with an upward moving fluidizing fluid wherein said bed is subjected to a non-alternating magnetic stabilizing means at a superficial fluid velocity between $U_{mf}$ and $U_T$. A more uniform velocity profile can be obtained by increasing the strength of the magnetic stabilizing means, reducing the superficial velocity of the fluidizing fluid, reducing the bed tilt angle or reducing the average solids velocity, each alone or in combination with another. A more uniform bed height profile can be obtained by decreasing the strength of the magnetic stabilizing means, increasing the superficial velocity of the fluidizing fluid, increasing the bed tilt angle or increasing the average solids velocity, each alone or in combination with another. Accordingly, using the present invention, an essentially uniform solids velocity profile and bed height profile can be obtained by properly adjusting magnetic field, superficial velocity of the fluidizing fluid, bed tilt angle and average solids velocity. Also, uniformity of the solids velocity profile and the bed height profile can be enhanced by proper design of a solids flow weir at the bed exit.

The expression "essentially uniform velocity profile" or "essentially flat velocity profile" as used herein refer to a velocity profile similar to the one obtained with non-Newtonian pseudoplastic (i.e., shear thinning) fluids with a flow behavior index, n, not higher than 0.25. (See R. B. Bird, R. C. Armstrong, O. Hassager, *Dynamics of Polymeric Liquids, Vol I, Fluid Mechanics:* John Wiley and Sons Editor, p. 214, New York (1977)). With the flow behavior index approaching zero, the velocity profile across the bed height becomes flat; i.e., the local solids velocity, $V_s$, at any point across the bed height is equal to the average solids velocity, $V_m$, defined as $V_m = Q_v/A$ where $Q_v$ is the volumetric solids flow rate and A the solids flow cross-sectional area. With increasing values of n, an increasing portion of the velocity profile from the distributor to the bed surface exhibits velocity gradients. The portion of the velocity profile exhibiting gradients depends on the rheological characteristics of the flowing medium. When n equals one the velocity profile is parabolic and the local solids velocity can be as high as twice the average solids velocity. Thus, the expressions "essentially uniform (and essentially flat) velocity profile" refer to a velocity profile wherein the local solids velocity, $V_s$, in at least 75% of the bed height (measured from the bed surface) does not deviate by more than 15% of the average solids velocity, $V_m$, at any point along the solids flowpath not affected by flow disturbances caused by introducing or removing solids from the bed. Similarly, the expression "uniform bed height profile" as used herein refers to a bed height profile wherein the bed height, h, does not deviate by more than 20%, (preferably by no more than 10%) of the average bed height as measured at the mid-point between bed inlet and outlet at any location along the solids flowpath not affected by low disturbances caused by introducing or removing solids from the bed.

The magnetic means which stabilizes the bed should be of sufficient strength to suppress particle backmixing within the bed but below that which would cause excessive particle-to-particle attraction forces. The magnetic stabilizing means may be produced internally using permanently magnetized particles or externally using an applied magnetic field. While the magnetic stabilizing means employed may be either internal or external (with external being preferred), the present invention will be described hereinafter with respect to the use of an externally applied magnetic field having a substantial component along the direction of the external force field (i.e. gravity).

The magnetically stabilized fluidized bed used in the present invention has been described as a quiescent, non-bubbling fluid-like bed having a wide range of superficial fluid velocities between $U_{mf}$ and $U_T$. The fluidity of a stabilized fluidized bed of particles may be improved by operating the bed within a narrower range substantially near the locus of transistion between the bubbling and stabilized regions of the bed, such that the fluidity ratio or $(U_T-U_{op})/(U_T-U_{mf})$ ranges between $-0.1$ and $+0.5$, preferably between $-0.05$ and $+0.2$, and more preferably between $-0.01$ and $+0.1$, where $U_{op}$ is the actual operating superficial fluid velocity (hereinafter denoted as $U_f$).

Depending on the particular processing objective, the specific process wherein the bed is operated in a narrow range between $U_{mf}$ and $U_T$ may be conducted in the bubbling mode (corresponding to negative values of fluidity ratio) or in the substantial absence of bubble formation (corresponding to positive values of fluidity ratio). For example, the bed will normally be operated in the bubbling mode when heat transfer is desired. Usually however, it is preferred that the strength of the magnetic stabilizing means be maintained so as to prevent or suppress substantial bubble formation and fluid bypassing in the bed.

An important feature of this specific embodiment of the invention is that the fluidity of a bed of magnetically stabilized fluidized particles continuously decreases from the fluidity at the bubbling or transition fluidization velocity $U_T$, as the magnetic field is increased above, or the superficial fluid velocity is decreased below, the value at transition, $U_T$. Thus, in the case of moving beds, it is desirable to operate close to the locus of transition between the stable non-bubbling bed and the bubbling region in order to

4

take advantage of the increased fluidity. Transverse flowing stabilized beds which are operated close to $U_T$ exhibit a non-plug flow solids velocity profile in the vertical direction in the absence of a solids flow controlling weir at the bed exit. Transverse flowing stabilized beds which are operated further away from $U_T$ exhibit an essentially plug flow (i.e., flat) solids velocity profile. Deviations from plug flow profile when the beds are operated in the more fluid region may be reduced or substantially eliminated by proper design of a solids flow weir at the bed exit.

The fluidity of the bed can be determined by measuring the angle of repose of the bed particles at given superficial fluid velocities and applied magnetic fields. The data in Tables IV, V and VI hereinafter show that by increasing the applied magnetic field or decreasing the superficial gas velocity from the transition point increases the angle of repose. Thus, to obtain increased bed fluidity, the stabilized fluidized bed should be operated at low applied magnetic fields or high fluid transition velocities (i.e., as close to transition as possible). The induced magnetization of the particles should not be sufficient to cause excessive particle-to-particle attractive forces in the bed.

In another preferred embodiment of the invention the solids are conveniently yet simply transported by introducing the fluidizing fluid into the bed (normally into the lower portion of the bed and preferably through a distribution means which orients the fluid) such that a substantial velocity component of the fluid is in the transverse flow direction; i.e., the direction of solids flow. The transverse momentum of the fluidizing fluid is imparted to at least a portion of the bed solids which causes the transverse flow of the bed. As used herein, substantial or appreciable velocity component refers to the fluidizing fluid entering the bed having a velocity component in the transverse direction sufficient to induce (i.e., to initiate and maintain) transverse flow of at least a portion, preferably a major portion) of the bed solids. Use of this technique reduces the need for or eliminates the costly and inconvenient pneumatic, hydraulic and mechanical transport devices disclosed in the literature. In addition, the need to reintroduce large volumes of solid into the bed may also be reduced or eliminated, thereby reducing the magnitude of any gradient in bed depth along the direction of solids flow. Further, solids attrition and erosion of equipment due to transport are also minimized.

Magnetically stabilized fluidized beds have the appearance of expanded fixed beds with essentially no gross solids backmixing and essentially no fluid bypassing such as bubbling in gas fluidized beds and roll-cell behavior in liquid fluidized beds. The application of the magnetic field allows superficial fluid flow rates of 2, 5, 10 or more times the flow rate of the fluidized bed at incipient fluidization in the absence of the magnetic field, along with the substantial absence of gross solids backmixing and fluid bypassing. As the superficial fluid velocity is increased, the pressure drop through the bed is similar to that which would be expected from a normal fluidized bed not subjected to an applied magnetic field—the pressure drop increases to a value corresponding to the ratio of bed weight to cross-sectional area at the minimum fluidization velocity, and then remains relatively constant as the fluid velocity is increased. This stably fluidized bed condition persists even as the solids are continuously added to and removed from the contacting vessel. In general, the locus of the distance of the surface of the bed from the distribution means (e.g., a distribution grid) in transverse flowing stabilized beds is non-uniform along the path of the bed, and is herein referred to as the non-uniform bed height profile. The bed will also exhibit a hydraulic gradient, herein referred to as the angle of solids flow. In addition, transverse flowing magnetically stabilized fluidized beds show a non-uniform solids velocity profile across the depth of said bed. Both the bed height profile and the transverse solids velocity profile are affected by bed operating conditions such as superficial velocity of the fluidizing fluid, applied magnetic field, solids throughput rate, bed geometry, bed tilt angle, design of the distributor and solids inlet and design of the outlet weir. Several applications of the continuous transverse flow magnetically stabilized fluidized beds require essentially uniform, transverse solids velocity profiles and bed height profiles. Uniform solids velocity profiles are favored because they improve contacting, separation and reaction efficiency. Bed height uniformities are desirable because they prevent gas maldistribution which can lead to poor gas-solids contacting and, potentially, to bed destabilization. These desirable characteristics of the transverse flow fluidized beds can be achieved by appropriately adjusting operating parameters (such as applied magnetic field and superficial velocity) and by proper selection of design parameters such as bed width and height, bed tilt angle and weir height and configuration.

The magnetically stabilized bed (MSB) thus described combines in one system principal advantages of both fluidized bed and fixed bed systems as is summarized in Table I below.

TABLE I

| | Fluid bed | MSB | Fixed bed |
|---|---|---|---|
| Small particle size with low $\Delta p$ | yes | yes | no |
| Absence of fluid bypassing | no | yes | yes |
| Continuous solids throughput | yes | yes | no |
| Avoids solids backmixing | no | yes | yes |
| Avoids entrainment from bed | no | yes | yes |

As an example of the advantage of a magnetically stabilized bed, the use of small particle size reduces diffusional resistance within a bed particle such that the particle (be it catalyst or sorbent) can be used more effectively. At the same time, both high pressure drop and gross fluid bypassing are eliminated. If used as a sorbent, small particles having a magnetic component permit faster transfer of the sorbed species from the contacting fluid than do larger adsorbent particles, thereby enabling a faster approach to equilibrium. Also with magnetically stabilized beds, several steps or operations can be combined in the single reacting system: for example, simultaneous reaction and fluid-to-particle heat exchange, particulate removal plus chemical reaction, etc. An additional advantage is that the solids can be added to or removed from the bed. Since the stabilized beds are mobile, it is possible to carry out continuous reactions with frequent regenerations so that catalyst or sorbent activity can be restored rapidly in another vessel following a short cycle.

The bed may contain magnetic and non-magnetic materials. For example, non-magnetic particles may be used as admixtures or as composites with a ferromagnetic or ferrimagnetic substance. All ferromagnetic and ferrimagnetic substances, including, but not limited to, magnetic $Fe_3O_4$, $\gamma$-iron oxide ($Fe_2O_3$), ferrites of the form $MO \cdot Fe_2O_3$, wherein M is a metal or mixture of metals such as Zn, Mn, Cu, etc.; ferromagnetic elements including iron, nickel, cobalt and gadolinium, alloys of ferromagnetic elements, etc., may be used as the magnetizable and fluidizable particulate solids which are used in admixture or composited with the non-magnetic particles. Alternatively, the nominally non-magnetic material may itself contain a ferromagnetic or ferrimagnetic substance in its chemical or physical makeup. In this case, the non-magnetic material exhibits magnetic properties. Therefore, no additional magnetic material need be admixed or composited with the non-magnetic material.

The magnetizable particles used in the present invention must have the proper magnetizable properties (and in some instances sorption or catalytic properties). Depending upon the application, a variety of magnetizable particles may be utilized. For non-catalytic operations such as filtering and heat transfer, ferro-magnetic solids such as stainless steels, cobalt, iron and nickel as well as natural ferrites can be used. For catalytic or sorption applications the magnetizable particles may be included in suitable catalyst or sorption particle bases such as silica, alumina or silica alumina. A method of preparing magnetizable sorption particles is described in U.S. Patent 4,247,987.

The weight fraction of magnetizable component when admixed or composited with the non-magnetic component will vary depending upon process conditions, the particular application of the present invention and the like. Thus, depending on these factors, the fraction of magnetizable component in the bed can range from less than 1 wt.% to as much as 100 wt.%. Preferably, the fraction of magnetizable component in the bed will be at least 10 wt.% and more preferably will range from about 25 to 75 wt.%.

The bed particles (composites or admixtures) will typically have an average mean particle diameter ranging from about 50 to about 1500 microns ($\mu$m). The particles may be of a single size or a mixture of several size ranges. Similarly, the particles may be of any shape, e.g., spherical, irregular shaped or elongated.

For economy, it is desirable that the bed solids achieve sufficient magnetization to stabilize the bed at a relatively small intensity of applied magnetic field. When ferromagnetic particles are placed in the magnetic field, the induced magnetization is a function of the magnetic material, the geometry of the ferromagnetic particle and the geometry of the bed, as is described in U.S. Patent 4,247,987.

Conventional permanent magnets, electromagnets or both can be employed to provide the magnetic field. The electromagnets may be energized by direct current. When powered by direct current with the use of solid state control or a transformer/rectifier, electromagnets are particularly desirable for applying a magnetic field to the bed particles and provide the excellent method of stabilizing the fluidization of the bed particles in response to the flow of the fluidizing fluid.

The invention is not limited by the shape or positioning of the magnet employed to produce the externally applied magnetic field. The magnet can be of any size, strength or shape and can be placed above or below the bed depending upon the solids used, the degree of stabilization required and the like. The magnets can be placed within or outside the vessel and may even be employed as an integeral portion of the vessel structure. The process is not limited to any particular vessel or vessel material and it can be readily adapted for use in contacting vessels currently employed by industry. In a preferred embodiment, a solenoidal shaped electromagnet is employed to surround the fluidized bed as this provides the most uniform magnetic field and consequently the best stability throughout the bed.

With proper selection of magnetic particles, the power requirement for the electromagnet field source in commercial plants will be modest. Magnet power dissipation generated heat that may be removed using natural convection air cooling and attendant requirements for coolant treatment and recirculation. The magnetic field source may be computer designed with high confidence to yield an applied magnetic field having a specified intensity and uniformity.

The strength of the magnetic field to be applied to the fluidized solids in the contacting zone will depend on the magnetization of the magnetizable particles and the degree of stabilization desired. Particles having relatively weak magnetic properties, e.g., some composites and alloys, will require the application of a stronger magnetic field than particulate solids having strong magnetic properties, e.g., iron, to achieve similar stabilization effects. The size and shape of the solids will also have an effect on the strength of the magnetic field to be employed. The magnetization of the particles should not be sufficient to cause excessive particle-to-particle attractive forces and agglomeration which would tend to freeze or lock the particles in the bed and prevent continuous operation. However, since the strength of the field produced by an electromagnet depends on the current strength of the electromagnet, an operator can readily adjust the field strength to achieve the desired degree of stabilization for the particular system employed. Specific methods of applying the magnetic field are also described in U.S. Patent Nos. 3,440,731; 3,439,899; 4,115,927 and 4,143,469; British Patent No. 1,148,513 and in the published literature, e.g., M. V. Filippov, Applied Magnetohydrodynamics, *Trudy Instituta Fizika Akad. Nauk.*, Latviiskoi SSR 12:215—236 (1960); Ivanov et al, *Kinet. Kaval, 11* (5):1214—1219 (1970); Ivanov et al, *Zhuranal Prikladnoi Khimii*, 45:248—252 (1972); and R. E. Rosensweig, *Science, 204:*57—60 (1979). The most preferred applied magnetic field will be a uniform magnetic field such as is described in U.S. Patent No. 4,115,927. The intensity of the applied magnetic field may vary broadly depending upon the specific applications of the present invention, but should be minimized to reduce operating costs. Typically, the applied magnetic field for an empty vessel will range from 5 to 1500 Oersteds, (398 to 119366 A/m) preferably from 10 to 1000 Oersteds (796 to 79577 A/m).

The present invention can be utilized in a wide variety of processing configurations. For example, after undergoing the continuous transverse flow contacting described previously, the magnetizable particles may be removed from the contacting chamber, although the removal may be intermittent. If desired, the bed particles may be recycled to the contacting chamber or be passed through said chamber in a single pass mode; e.g. an iron ore reduction processor or a solids drying process. As an example of another configuration, the magnetizable particles may be removed continuously (or intermittently) from a first contacting chamber and passed to a second contacting chamber for regeneration prior to being recycled to the first contacting chamber.

Similarly, the present invention may be applied readily to a variety of processes, including, but not limited to, particulate removal of solids, sorption separation processes, and solids—solids separation processes. For example, the present invention is well suited for removing small contaminant particulates from a fluid stream, especially at elevated temperatures and pressures which are beyond the capability of commercial electrostatic precipitators and baghouses. For gas phase beds, the gas bubbles and bypassing which render conventional gas phase fluidized beds ineffective for filtration are absent. For liquid phase fluidized beds, the roll-cell behavior normally present is absent when the bed is stabilized. Compared to a settled bed of small-size solids, the expanded structure of a magnetically stabilized bed can collect a much greater quantity of particulates without tending to plug at the fluid inlet face. The flow properties of the solids facilitate use of a continuous solids-flow system in which the particulate-laden solids flow to another vessel for regeneration and particulates removal.

In the specific embodiment wherein the entering fluidizing fluid has a velocity component in the direction of the solids flow, the process can take place in any suitable vessel or contacting zone. The vessel may be equipped with internal supports, trays, etc. Preferably there will be disposed in the lower portion of the vessel a distribution means which supports the bed and distributes the incoming fluidizing fluid, which may be gaseous or liquid. The particular distribution means employed is not critical provided it can orient at least a portion of the fluidizing fluid in the direction of bed solids flow; i.e., the fluid (normally the fluid in the lower portion of the bed adjacent to the distribution means) will enter the bed having a velocity component in the direction of desired bed solids flow and transverse to the flow of the fluid leaving the bed. The orientation may be obtained using a distribution means containing holes or perforations, alone or in combination with nozzles or louvres, slanted in the direction of desired solids flow. Normally, such slanted propulsion passages will be arranged in rows, offset and staggered to ensure a uniform distribution of fluidizing fluid in the bed. However, the actual spacing of the holes and their size and shape will vary depending upon the type of solids in the bed, the velocity of the fluidizing fluid and the like. If desired, the propulsion passages may extend into the bed, being placed on top of the grid or porous plate.

The angle at which the propulsion passages are slanted can vary broadly depending on process parameters such as the particular solids and fluidizing fluid employed, the solids velocity, the strength of the magnetic field and the like. Normally, however, the propulsion passages will be slanted at an angle between about 5° and about 85° relative to the vertical in the direction of solids flow.

7

The fluidizing fluid which enters the bed will have horizontal and vertical components of velocity. However, while all of the fluid serves to fluidize the bed, only that portion of the fluid having a horizontal component of velocity contributes to initiating and maintaining the transverse flow of solids in the bed.

The present invention can be utilized alone or in combination with a variety of operations including, but not limited to, fluid operations (e.g., drying, acid gas removal, selective adsorption or absorption of a constituent, solids/solids separations), heating and cooling fluids using the heat capacity of the solids, particulate removal from gases, droplet and haze removal from gases and thermal as well as catalytic conversion of solids and fluids. Thus, using the present invention, a catalytic process can be combined with selective removal of one of the reaction products, or particulate removal can be combined with gas-to-gas heat exchange as well as gas desulfurization. This invention can also be used to transport solids from one vessel to another, or form one side of a single vessel to another side of the same vessel, or for producing transverse flow in a magnetically stabilized fluidized solids bed within which particulates capture, solids/solids separation, chemical reaction, and the like occur in the same zone or in separate zones.

The operating conditions employed in the present invention will vary broadly depending upon the particular application. In general, however, temperatures will range from ambient, or lower, to the Curie temperature of the magnetic component within the bed, and pressures will preferably range from about 0.003 to about 30 mPa. In general, the contact time of the fluidizing fluid with the solids comprising the bed need only be sufficient to initiate and maintain flow in at least a portion of the bed. The superficial velocity of the fluidizing fluid will range between $U_{mf}$ and $U_T$ and will vary depending on the inclination of the distributor, herein referred to as bed tilt angle, the geometry of the vessel, the particular solids being fluidized and the like. Preferably, however, the superficial fluid velocity will range from about 0.0001 to about 5 m/sec. Liquid-phase superficial fluid velocities will preferably range from about 0.0001 to about 0.1 m/sec., while gas phase superficial fluid velocities will preferably range from about 0.001 to 5 m/sec. Similarly, the solids transverse flow velocity of the fluidizing fluid, the geometry of the vessel, the solids velocity will range from about 0.001 to about 200 cm/sec., more preferably from about 0.001 to about 50 cm/sec., and most preferably from 0.001 to 20 cm/sec.

A specific application of the present invention involves removal of particulates from hot gases evolved from a pressurized fluid bed coal combustor prior to contact with expansion turbines for power recovery in a combined cycle system. In such a process coal, limestone and compressed air are fed to a pressurized fluid bed boiler. The hot gases from the boiler (at 925°C and 950 kPa) are transported to primary and secondary cyclones to remove ash. The gases are then fed continuously to a transverse flow magnetically stabilized contactor such that 99+% of the incoming particulates are removed. The particulate-laden solids flow to a bubbling bed elutriator. A small amount of air or steam is used to fluidize this bed and carry the flyash overhead. After partial cooling of the elutriator gas, the particulates can be removed by a conventional electrostatic precipitator. The cleaned hot gases are then fed to the turbines for air compression and power generation.

The present invention can be applied to separate a mixture comprising non-magnetic solids having different densities by adjusting the specific gravity or density of the bed. This adjustment is accomplished by introducing a mixture comprising non-magnetic solids having different densities into a transverse flow magnetically stabilized bed. Solids which are more dense than the bed medium ideally tend to sink in the bed while solids which are lighter than the bed medium tend to float on the surface of the bed. Since two or more different density fractions may be recovered according to this process, the bed should be stabilized to eliminate solids remixing. Preferably, the process should be operated at increased bed fluidity to facilitate movement of the solids and promote rapid separation.

The ability to remove magnetized solids from a highly magnetized bed is important in many applications. With certain types of magnetizable solids, such as iron and steel, the particle-to-particle attraction leads to stickiness in the bed that limits the bed fluidity in continuous units at particle magnetization values (M) of greater than about 500 gauss. In other words, the fluidity of some magnetizable particulate beds decreases with increasing applied magnetic field to the point where the bed solidifies as a slug. Low fluidity can cause flow stoppage and bed "locking" which can adversely affect the smooth operation of magnetically stabilized beds. Hence, bed fluidity is an important parameter for the design of a magnetically stabilized bed adsorber or reactor system.

This invention will be further understood by reference to the following Examples.

Example 1

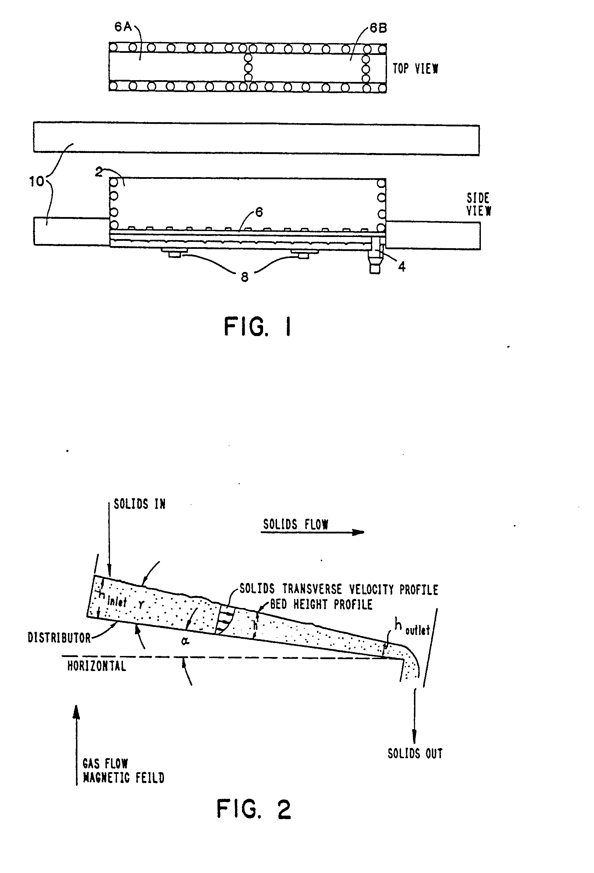

Figure 1 shows a schematic diagram of the top and side view of the transverse flow magnetically stabilized bed experimental apparatus. Solids are added from the left side above the bed 2, flow to the right, and leave through a 2.5 cm space 4 at the end of the grid 6. The length of the bed in the solids flow direction is about 68.6 cm and bed widths of 2.5 and 7.6 cm are used. Grid 6 is divided into two sections 6A and 6B, each about 34.3 cm long, which are supplied with fluidizing air 8 independently.

Continuous operation is achieved using pneumatic transport of the solids from below to above the bed. Solids flow from the bed into a 2.5 cm transfer tube on the right side and are then carried up a 2.5 cm riser tube to a 7.6 cm disengaging section.

The magnetic field is produced by two solenoidal electromagnets 10, connected in parallel, placed one above the other 15.5 cm apart. The magnets are made of 700 turns of No. 14 enamelled copper wire and are

8

elliptical in design with inside dimensions of 22 cm×94.5 cm. Due to the smaller radius of curvature, the magnetic field is naturally higher at the ends of the magnets.

In performing the experiments, the solids were first added and fluidized vigorously. Solids circulation was then initiated and the velocity of the fluidizing gas was established. The magnetic field was then applied.

The effects of magnetic field and superficial gas velocity on bed solids transverse flow velocity profile and bed height were determined by setting the gas velocity with solids circulation and then increasing the applied magnetic field for several values of fluidizing velocity. Data were obtained at increasing magnetic field strengths ranging from just above stabilization to either the point at which the flow of solids stopped or to about 150 Oersted, (11936 A/m) the maximum obtainable magnetic field with the experimental apparatus. The solids transverse flow velocity was determined by measuring the time necessary for the solids to move between two points. The points were approximately 23 cm apart and located toward the center of the bed to eliminate end effects. The angle of solids flow was determined by measuring the height of the bed at the same two points. The bed height profile was determined by recording the bed height, h, at several points (approximately 5 cm apart) along the length of the bed. Figure 2 defines the distributor of bed tilt angle ($\alpha$), the angle of solids flow ($\gamma$), the bed height profile and the transverse solids velocity profile.

The particular bed tilt angle employed may vary broadly, depending upon the specific application of the present invention. Normally, however, the bed tilt angle will be less than 45 degrees and preferably less than 30 degrees with respect to the horizontal (i.e. the bed is inclined in a direction opposite to the solids flow along the distribution means or grid). Thus as shown in Figure 2, the bed surface is at a higher elevation where the solids are introduced than where the solids are removed from the bed. Typically, the bed tilt angle will range from 0 to about 20 degrees or less.

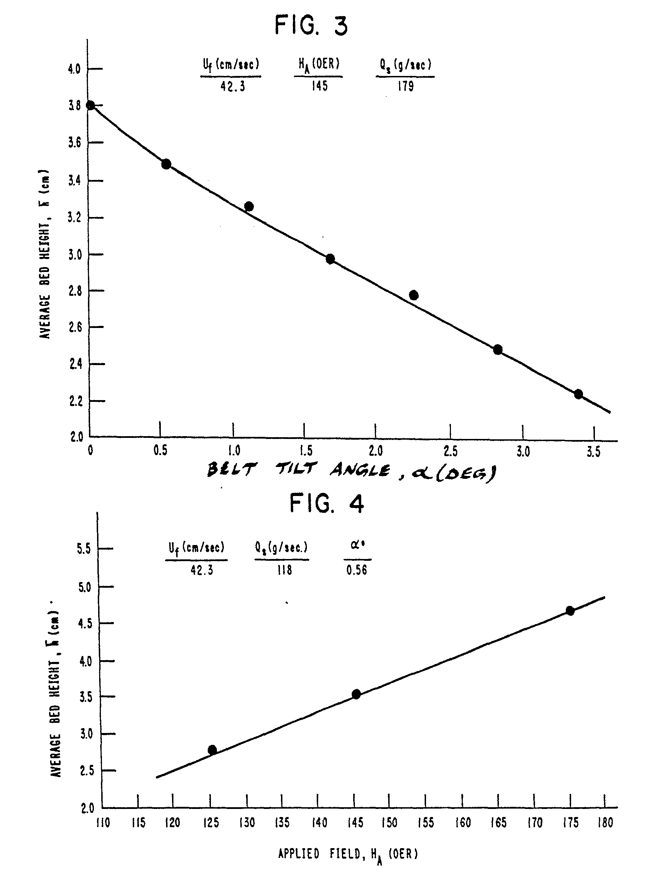

Using the apparatus just described, experiments were performed to determine the effect of various operating parameters (i.e. bed tilt angle, solids throughput, applied magnetic field, and fluidization velocity) on the uniformity of transverse solids velocity and bed height profiles. The solids used in these experiments were 70 wt.% stainless steel-alumina, −20 +80 U.S. sieve size with a mean size of 275 μm. The results of these experiments are shown in Figures 3—6 in terms of the average bed height. Average bed heights were obtained by integrating the measured profile over the bed length.

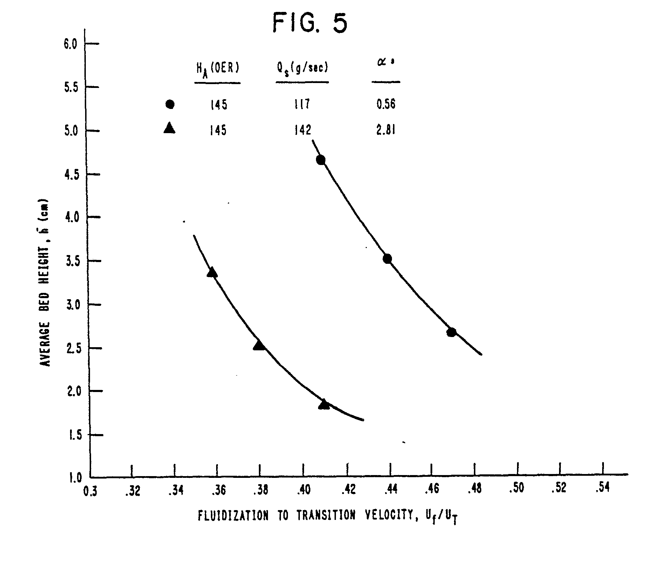

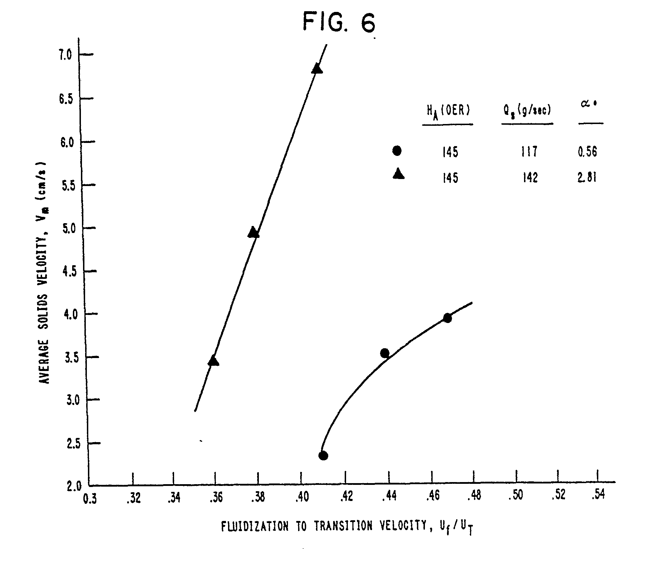

Figure 3 shows that if bed tilt angle ($\alpha$) increases, the average bed height ($\bar{h}$) decreases when the superficial fluid velocity ($U_f$), the applied field ($H_A$) and the solids mass flow rate ($Q_s$) are constant. Figure 4 shows that increasing the applied magnetic field produces a sharp increase in the average bed height at constant $U_f$, $Q_s$ and $\alpha$. Figure 5 shows that as the superficial fluid velocity approaches the transition velocity ($U_T$), the average bed height decreases. As the superficial fluid velocity is increased, the solids flow at a faster rate, as shown in Figure 6. Hence the bed height decreases for the same solids throughput.

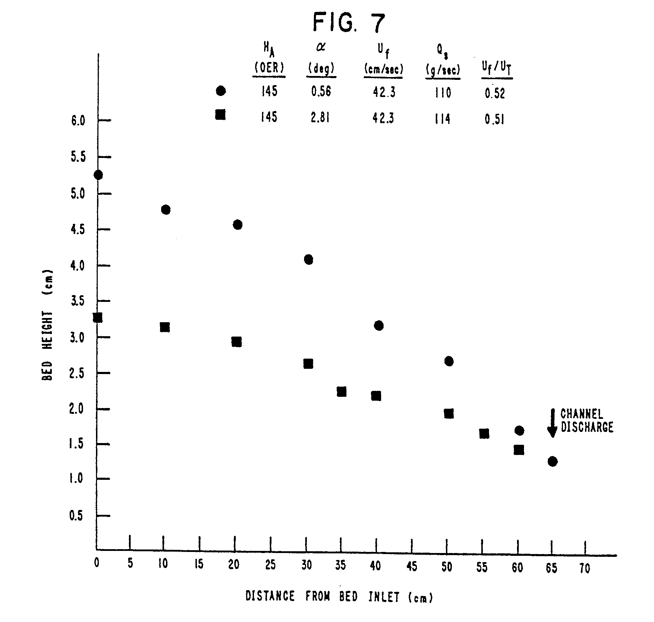

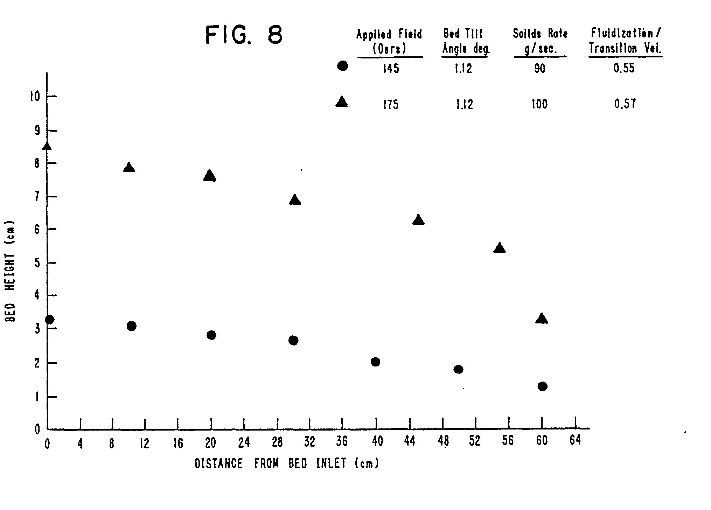

The effect of bed tilt angle and applied magnetic field on bed height profiles are shown in Figures 7 and 8, respectively. Figure 7 shows that increasing the bed tilt angle from 0.56° to 2.81° while maintaining other parameters essentially constant resulted in a more uniform bed height profile. However, the average bed height decreased from 3.5 to about 2.5 cm. If deeper beds (i.e. increased bed height) are required at the higher bed tilt angle, a weir of appropriate height should be used. Figure 8 shows that decreasing the magnetic field from 175 to 145 Oersted (13926 to 11539 A/m) has a similar effect on bed height profile as increasing bed tilt angle, i.e., bed profile becomes more uniform.

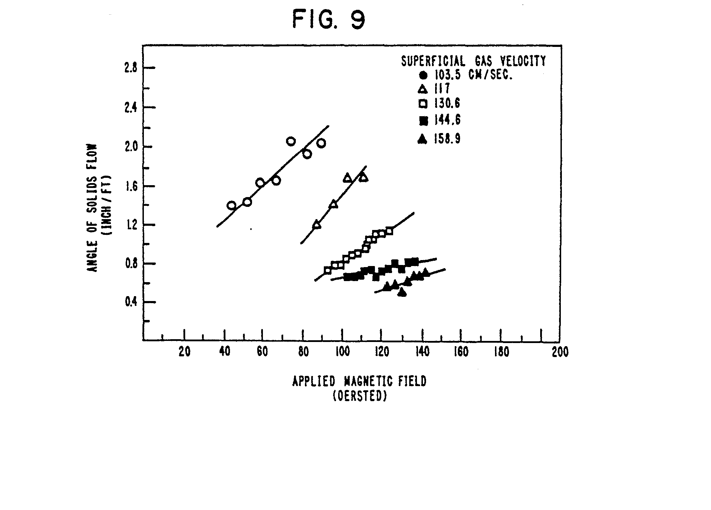

The effect of superficial fluid velocity on bed height profiles expressed in terms of the angle of solids flow $\gamma$ (see Figure 2) is shown in Figure 9 for composite particles of 70 wt.% stainless steel-alumina having −12+20 U.S. sieve size. As shown therein, bed height non-uniformity (i.e., the angle of solids flow) decreases with increasing superficial gas velocity.

The following analysis is offered to further illustrate the present invention. Magnetically stabilized fluidized beds are known to exhibit yield stress (see columns 16—19 of U.S. Patent 4,247,987) which, when considered with the solids velocity and bed height profiles disclosed herein, suggests that the bed solids have the rheological characteristics of a pseudoplastic (shear thinning) fluid with yield stress $\tau_o$. Such rheological characteristics can be approximated by the simple power law model for shear rates above about 0.2:

$$\tau = K \left( \frac{dV_s}{dh} \right)^n \tag{1}$$

From equation (1) and the apparent shear rate for the flowing solids $dV_s/dh = 8V_m/D_H$, an effective viscosity ($\mu_e$) for the flowing magnetically stabilized solids can be defined as

$$\mu_e = K \left( \frac{8V_m}{D_H} \right)^{n-1} \tag{2}$$

where K is the fluid consistency index, n is the flow behavior index, $V_m$ is the average transverse solids velocity and $D_H$ is the hydraulic bed diameter. The effective bed viscosity was estimated using theoretical analysis and experimental data on bed height profiles shown hereinafter.

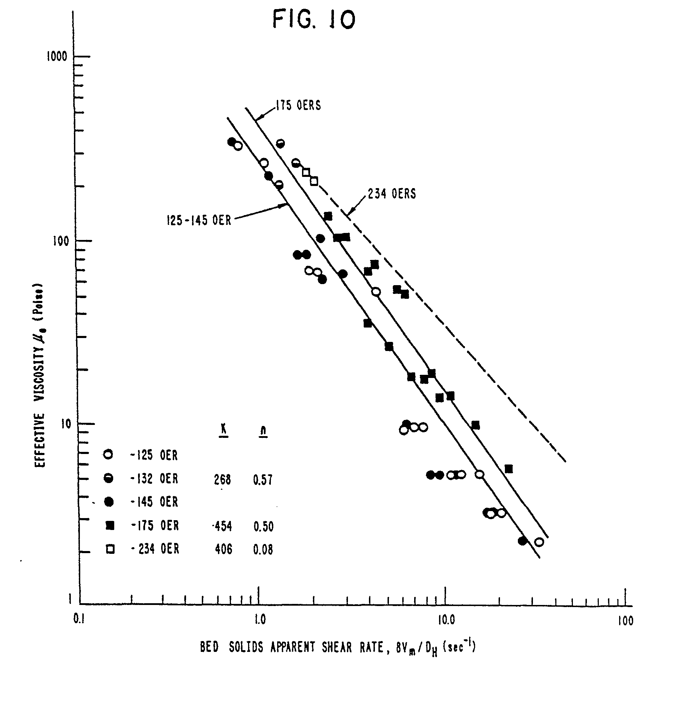

Figure 10 shows the least square fit of the effective bed viscosity along with K and n for different applied magnetic field strengths. As shown therein, the stabilized solids exhibit pseudoplastic behavior; i.e., the effective bed viscosity decreases (and fluidity increases) with increasing apparent shear rate. Figure 10 also shows that a decrease in the applied magnetic field reduces the effective bed viscosity (i.e., increases fluidity). The lower effective bed viscosity at lower applied fields results in shallower beds (as shown in Figure 4) and a more uniform bed height profile. The effect of superficial fluid velocity on bed viscosity is not shown explicitly in Figure 10. However it is present in the apparent shear rate parameter. Directionally, increasing superficial gas velocity decreases bed viscosity and, as shown in Figure 9, bed height profile uniformity (angle of solids flow $\gamma$) decreases. Figure 10 also shows that magnetically stabilized bed effective viscosities were comparable to conventional fluidized bed viscosities—less than about 50 poise for apparent shear rates greater than 5 $sec^{-1}$ and applied fields less than 175 Oersted. (13907 A/m) For higher applied fields and/or lower shear rates, effective viscosities become greater than in conventional fluidized beds.

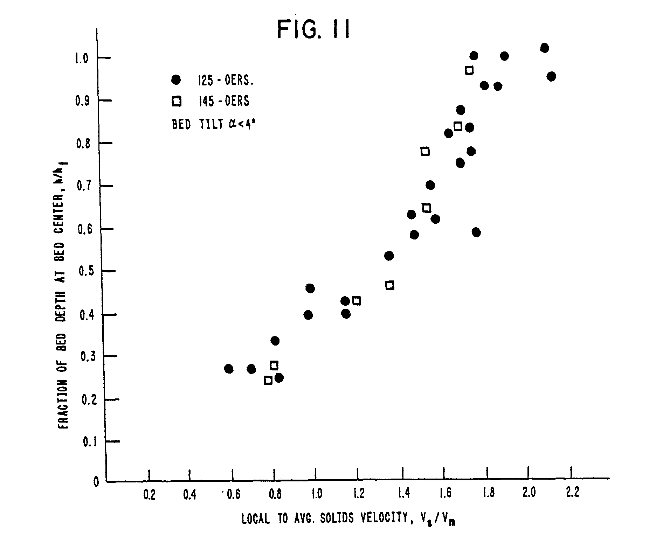

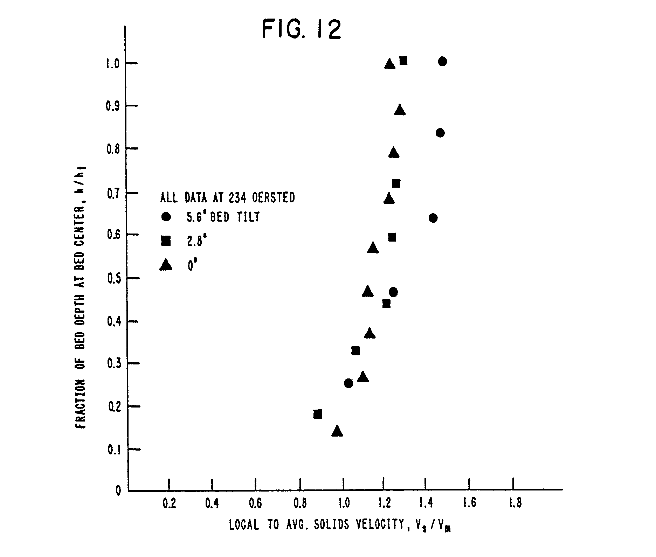

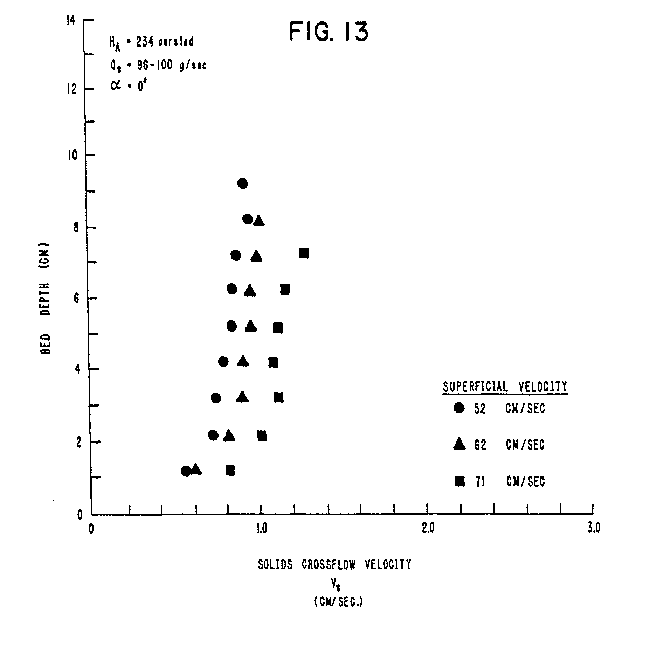

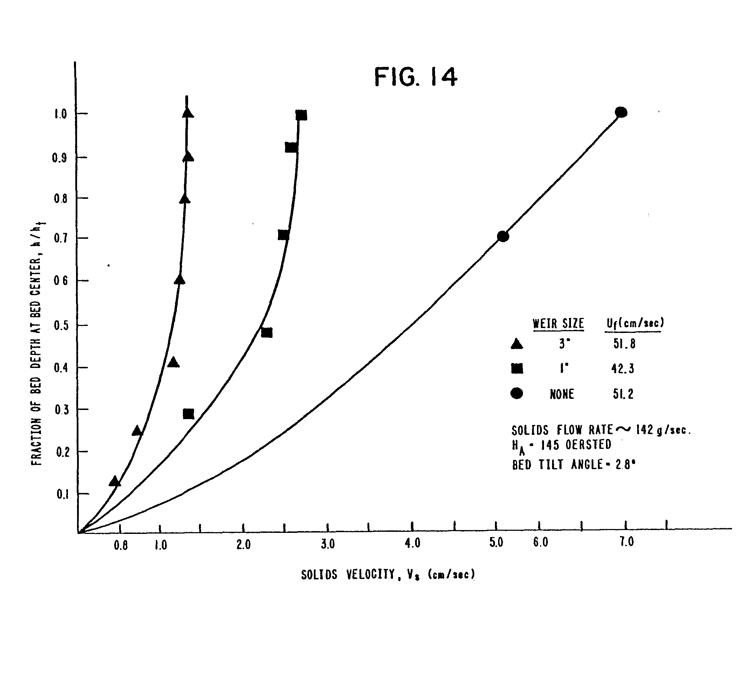

In the same apparatus shown in Figure 1, experiments were performed to determine the effect of various variables on the uniformity of transverse solids velocity profiles. The results of these experiments are shown in Figures 11 and 12 wherein the ratio of local to average transverse solids velocity $(V_s/V_m)$ is plotted as a function of the reduced bed height $h/h_t$, where ht is the total bed height at the center of the bed. Figure 11 shows that for low applied fields (i.e., $H_A$ less than or equal to 145 Oersted) (11539 A/m), the solids velocity profile is almost parabolic; i.e., there is substantial deviation from the desirable plug flow profile. However, Figure 12 shows that at higher applied fields, the profiles approached plug flow conditions in the major portion of bed height, especially at small tilt angles. These profiles are consistent with the shear thinning behavior of the magnetically stabilized solids; i.e., as the applied field increases, the fluidized medium becomes more viscous (less fluid), the flow behavior index in equation (2) attains smaller values (see Figure 10) and the velocity profile as given by a power law fluid becomes flatter. Data in Figure 12 indicate that even at high magnetic fields, velocity profiles would become less uniform with increasing bed tilt angle. The rheological characteristics, however, of stabilized solids suggest that increasing the applied magnetic field could eliminate velocity profile non-uniformities at higher bed tilt angles. The solids velocity profiles may also be improved by decreasing superficial fluid velocity or by increasing the weir height as shown in Figures 13 and 14, respectively.

Another series of experiments were conducted using a transverse flow magnetically stabilized bed to determine the effects of solids transverse flow on the transition velocity and the solids flow pattern. The unit employed was 10.16 cm wide, 55.88 cm long, had a porous plate grid and was similar in construction to that shown in Figure 1. A solids inlet baffle provided an opening of 5.5 cm above the porous plate grid through which solids flowed from a hopper. At the other end of the bed the solids flowed over a 7.6 cm high weir. The unit was surrounded by four electromagnets each 0.91 m inside diameter, 1.52 m outside diameter, and 15.9 cm high. There was a 17.8 cm spacing between each magnet.

The solids used were composite beads having a density of about 1 $g/cm^3$ which comprises 40 wt.% magnetic stainless steel and 60 wt.% alumina. Two sizes of solids were tested: 180—840 $\mu$m $(\bar{d}_p=450\ \mu m)$ and 710—1680 $(\bar{d}_p=1050\ \mu m)$, where $\bar{d}_p$ is the mean volume surface particle diameter. The solids were transported from the bed outlet by a dilute phase riser to the solids feed hopper.

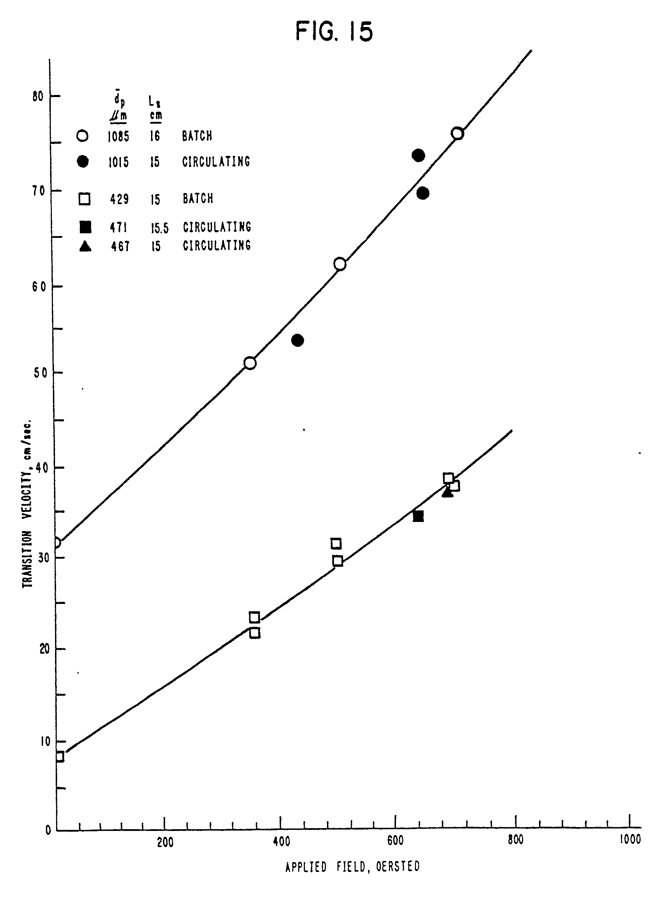

A comparison of transition velocities in batch and circulating transverse flow beds for both sizes of particles appears in Figure 15. L is the initial settled bed depth. As shown therein, the transition velocity to bubbling was not affected by the continuous solids horizontal flow and was the same as that for batch beds of the same solids.

In most of the experimental runs the bed appeared to move in nearly plug flow fashion. Over ninety percent of the bed exhibited a plug flow velocity while less than ten percent at the bottom showed some drag. Data showing the approach to plug flow are shown in Table II.

In the particular embodiment wherein the bed is operated at a narrower range the following discussion applies for Examples 2—4. Bed fluidity is characterized as a function of applied magnetic field and operating conditions. It thus establishes the basis for operating a transverse flowing bed at or near the transition point between a stable bed and a bubbling bed.

Example 2

Using the same solids as were used for Table II, additional transverse bed flowability data were obtained and are tabulated in Table III using the flow resistance index as a measure of fluidity. The data in Table III clearly show that at a constant magnetic field, decreasing the superficial fluid velocity causes an increase in the flow resistance index and thus a decrease in fluidity. Therefore, the most fluid operating conditions are those nearer the transition locus (i.e., at high fluid velocities and low magnetic fields).

# 0 085 563

TABLE II
Approach to plug flow

| Particle size d, $\mu$m | Superficial velocity $U_g$, cm/s | Solids linear velocity, exper.(1) $V_s$, cm/s | Solids flow rate, exper. $(Q_s)$ exp, g/s | Solids flow for plug flow (2) $(Q_s)$plug, g/s | $(Q_s)$ exp/ $(Q_s)$plug |
|---|---|---|---|---|---|
| 1015 | 67 | 1.8 | 132 | 143 | 0.92 |
| 830 | 55 | 1.7 | 135 | 145 | 0.93 |
| 471 | 33 | 2.3 | 158 | 177 | 0.90 |
| 467 | 34.5 | 2.5 | 165 | 184 | 0.90 |

(1) Measured at the bed surface by following tracer particles.
(2) Assumes that solids linear velocity is uniform and equal to the linear velocity of the tracer particles.

TABLE III
Effect of superficial velocity on bed flowability (1)

| Superf. velocity cm/s | Circulation rate, exp. $F_{exp}$, g/s | Solids linear velocity $U_s$, g/s | Bed height(3) H, cm | Angle of repose $\beta$, degrees | Flow resistance index (2), $\tan\beta/\tan\beta_o$ | Remarks |
|---|---|---|---|---|---|---|
| 34.5 | 165 | 2.5 | 15 | 14 | 0.42 | Smooth plug flow |
| 30.7 | — | 2.4 | 15.5 | 19.5 | 0.60 | Smooth plug flow |
| 26.0 | 176 | 2.4 | 16.5 | 25 | 0.79 | Smooth plug flow |
| 21.0 | 186 | 2.2 | 17.5 | 31 | 1.02 | Stick-slip flow |
| 18.5 | — | — | 18.5 | 33 | 1.10 | Stick-slip non-uniform flow |

(1) Small NALCO beads $\overline{d}_p$=467 $\mu$m, $U_{mf}$=8.2 cm/s. MP=160 Guass
(2) $\beta_o$: angle of repose of loosely packed solids in the absence of magnetic field=30.6
(3) Average height

Example 3
Flowability of magnetized solids

The experiments conducted hereinbelow show that the angle of repose of the bed particles relative to that of a loosely packed bed can be used as a measure of bed fluidity. The angle of repose, $\beta$, is the angle the surface of a pile of solids makes with the horizontal. Depending on the method of determination, various angles of repose can be defined. For example, the poured angle of repose is the maximum angle of the slope of a pile of solids poured from a funnel. In contrast, the tilting angle of repose is the maximum angle of tilt of a bed of solids before sloughing occurs.

A characteristic feature of fluidized beds of cohesionless solids (solids without interparticle forces) is that the angle of repose, $\beta$, decreases gradually with increasing superficial velocity, U, from its initial value, $\beta_o$ at U=0, to zero at the minimum fluidization velocity, $U_{mf}$. Thus,

$$\tan \beta = 1 - \frac{U}{U_{mf}} \tan \beta_o \tag{1}$$

The initial angle of repose, $\beta_o$, is approximately equal to the angle of internal friction, $\phi$, of a loosely packed bed. Thus, Equation (1) becomes

11

$$\tan \beta = 1 - \frac{U}{U_{mf}} \tan \phi \qquad (2)$$

The tangent of $\phi$ is referred to as the coefficient of interparticle friction.

The decrease in the angle of repose with increasing velocity is due to the corresponding decrease in interparticle friction. When interparticle friction becomes very small or vanishes, the solids exhibit full liquid-like behavior having very small or no resistance to shear such that the angle of repose becomes zero.

The decrease of interparticle friction with increasing velocity is also reflected in the viscosity of incipiently fluidized beds. In these beds, the flow limit, i.e., the shear stress, $\tau_o$, below which the bed behaves as a rigid structure, decreases with increasing superficial velocity and approaches zero at the minimum fluidization velocity. Below minimum fluidization, the bed is in a semifluid state and resembles a certain type of plastic with an angle of respose and a flow limit greater than zero.

When interparticle cohesive forces are present, as in the case of magnetically stabilized beds, Equations (1) and (2) are not applicable. These cohesive forces, imparted by the magnetic field, alter the rheological characteristics of the magnetized solid particles and therefore affect the angle of repose.

Experimental determination of solids angle of repose in a magnetically stabilized bed

The poured angle of repose was determined by partially filling a 7.62 cm diameter fluidized bed vessel with magnetizable solids. A solenoid electromagnet was placed around the bed of solids so as to provide a substantially uniform magnetic field. The bed was fluidized by passing air through a distributor grid at the lower portion of the vessel. Additional magnetizable solids were poured into the container from a funnel that was raised as the pile of solids increased to cover the 7.62 cm diameter surface. The results of several tests are shown in Tables IV and V.

The tilting angle of repose was determined in a manner similar to that described above. The vessel was partially filled with magnetizable solids, a magnetic field was applied and the bed was fluidized by passing air through the grid. Then the bed surface was tilted very slowly about the horizontal axis to a maximum angle without the solids sliding while the bed surface remained perpendicular to the direction of flow and the walls of the vessel. When the bed surface was tilted beyond the maximum angle, sliding occurred. The angle of the bed surface to the horizontal once the solids begin sliding is defined as the angle of repose. Data for the tilting angle of repose are shown in Table VI.

As shown therein at zero applied field, the angle of repose decreases with increasing velocity and approaches zero at the minimum fluidization velocity. This is in aggreement with Equations (1) and (2). When the applied field is greater than zero, the angle of repose similarly decreases with increasing velocity but approaches zero at velocities much greater than the minimum fluidization velocity. The data indicate that the angle of repose becomes zero at approxiamtely the transition velocity. This suggests that a magnetically stabilized bed is not fully fluid until velocities above the transition velocity are attained, despite the pressure drop being approximately equal to bed weight above minimum fluidization. Below the transition velocity, the bed is in a semifluid state.

TABLE IV
Poured angle of repose

Material: 33 Wt.% stainless steel beads
Particle size: 192μm
Particle density: 2 g/cm$^3$
Bed height: 3.3~5.1 cm
Bed diameter: 7.62 cm

| Applied field, oersteds (A/m) | | Magneti- zation, gauss | Velocity, cm/s | Angle of repose β, degrees | tan β | Remarks |
|---|---|---|---|---|---|---|
| 0 | 0 | 0 | 0 | 31 | 0.60 | $U_{mf}$=5 cm/s |
| 0 | 0 | 0 | 5 | 3 | 0.06 | |
| 130 | (10345) | 57 | 0 | 34 | 0.66 | $U_T$=12.8 cm/s |
| 130 | (10345) | 57 | 0 | 37.5 | 0.76 | |
| 130 | (10345) | 57 | 4.4 | 22 | 0.40 | |
| 130 | (10345) | 57 | 7.8 | 7.5 | 0.13 | |
| 130 | (10345) | 57 | 7.8 | 6 | 0.10 | |
| 200 | (15915) | 82 | 0 | 45 | 1.00 | $U_T$=17.2 cm/s |
| 200 | (15915) | 82 | 0 | 43 | 0.93 | |
| 200 | (15915) | 82 | 4.3 | 34 | 0.66 | |
| 200 | (15915) | 82 | 4.3 | 31 | 0.60 | |
| 200 | (15915) | 82 | 7.8 | 18.5 | 0.33 | |
| 200 | (15915) | 82 | 7.8 | — | — | |
| 200 | (15915) | 82 | 10 | 15 | 0.26 | |
| 300 | (23873) | 124 | 0 | 49 | 1.13 | $U_T$=26.0 cm/s |
| 300 | (23873) | 124 | 7.8 | 36 | 0.73 | |
| 300 | (23873) | 124 | 14.2 | 25 | 0.46 | |
| 300 | (23873) | 124 | 19.3 | 15 | 0.26 | |

# 0 085 563

TABLE V
Poured angle of repose

Material: Magnetite
Particle size: 266 µm
Particle density: 5 g/cm
Bed height: 2.5~5.1 cm
Bed diameter: 7.62 cm

| Applied field, oersteds (A/m) | | Magneti-zation, gauss | Velocity, cm/s | Angle of repose $\beta$, degrees | Tan $\beta$ | Remarks |
|---|---|---|---|---|---|---|
| 0 | | 0 | 0 | 39 | 0.80 | U=13.7 cm/s |
| 0 | | 0 | 7.5 | 21 | 0.38 | |
| 0 | | 0 | 12.3 | 9 | 0.15 | |
| 0 | | 0 | 12.3 | 11.5 | 0.20 | |
| 65 | (5179) | 210 | 0 | 41 | 0.86 | U=43.2 cm/s |
| 65 | (5179) | 210 | 12.8 | 34 | 0.66 | |
| 65 | (5179) | 210 | 22.6 | 25 | 0.46 | |
| 65 | (5179) | 210 | 38.6 | 8 | 0.13 | |
| 65 | (5179) | 210 | 38.6 | 5 | 0.08 | |
| 130 | (10346) | 380 | 0 | 45 | 1.0 | U=65.8 cm/s |
| 130 | (10346) | 380 | 0 | 47 | 1.06 | |
| 130 | (10346) | 380 | 8.6 | 45 | 1. | |
| 130 | (10346) | 380 | 19.3 | 41 | 0.86 | |
| 130 | (10346) | 380 | 25.7 | 34 | 0.66 | |
| 130 | (10346) | 380 | 45 | 15 | 0.26 | |
| 200 | (15916) | 560 | 0 | 55 | 1.40 | |
| 200 | (15916) | 560 | 0 | 51 | 1.40 | |

14

**0 085 563**

TABLE VI

Tilting bed angle of repose

Material: 33 Wt % Stainless steel beads
Particle size, Nominal: 177—425 µm
Particle density: 1.7 g/cm
Bed height: 3.8 cm
Bed diameter: 3.8 cm

| Applied field, oersteds (A/m) | Velocity, cm/s | Angle of repose β, degrees | Tan β |
|---|---|---|---|
| 0 | 0 | 34 | 0.67 |
| 0 | 4 | 4.5 | 0.07 |
| 0 | 4 | 5 | 0.087 |
| 150 (11937) | 4 | 20 | 0.36 |
| 150 (11937) | 5 | 19 | 0.34 |
| 150 (11937) | 6 | 10 | 0.17 |
| 150 (11937) | 8.5 | 4.5 | 0.078 |
| 300 (23873) | 4 | 30 | 0.58 |
| 300 (23873) | 6 | 28 | 0.53 |
| 300 (23873) | 8.5 | 24 | 0.44 |
| 300 (23873) | 10.8 | 19 | 0.34 |
| 300 (23873) | 13.5 | 14 | 0.25 |
| 300 (23873) | 19.0 | 5.5 | 0.096 |
| 480 (38197) | 4.5 | 42.5 | 0.91 |
| 480 (38197) | 8.5 | 43 | 0.93 |
| 480 (38197) | 13.5 | 37 | 0.75 |
| 480 (38197) | 19.0 | 21 | 0.38 |
| 480 (38197) | 23.0 | (1) | (1) |

(1) Channelling at the wall

The angle of repose increased with increasing magnetic field. At high fields and low-to-moderate velocities, the bed attained values that are higher than the angle of repose of loosely packed solids. This would imply that at high particle magnetizations, the fluidity in a magnetically stabilized bed is lower than that in packed beds. In the case of the magnetite used for the experiments reported in Table V, at high applied fields, the bed was highly structured and needle formation was observed at the surface of the pile. The length of the needles increased with magnetization and sometimes reached the tip of the funnel.

The effect of interparticle cohesive forces on bed fluidity

The presence of interparticle magnetic forces in a magnetically stabilized bed gives rise to a bed structure with mechanical strength even in an expanded state. The particles are not "free flowing" as in a conventional fluidized bed because each collision leads to coherence between the colloiding particles. The bed resembles a type of plastic with a yield stress greater than zero. Increasing the magnetic forces increases the resistance of deformation and flow. Furthermore, the flow properties will be anisotropic due to dipole-dipole orientation of bed particles along the direction of applied field. An analysis of the data in Tables IV, V and VI indicates that the effect of these forces on bed fluidity is reflected in the angle of repose.

15

Thus, the angle of repose of the magnetized solids in a fluidized bed can be used as a measure of the relative fluidity of the solids in magnetically stabilized beds.

A flow resistance index, R, is defined as follows:

$$R = \frac{\tan \beta}{\tan \phi} \simeq \frac{\tan \beta}{\tan \beta_o} \qquad (3)$$

where $\beta$ is the poured angle of repose measured at a given velocity and particle magnetization, $\beta_o$ is the poured angle of repose of loosely packed solids at $U=0$ and $M_p=0$, and $\phi$ is the angle of internal friction, taken approximately equal to $\beta_o$. When $R=0$ the bed is fully fluidized and the fluidity is similar to that of an incipiently fluidized bed without a magnetic field. When $R=1$, bed fluidity should be essentially the same as the fluidity of a packed bed of solids. For $O<R-1$, the bed is in a semi-fluid state with a fluidity between that of a packed bed and a fluidized bed. For $R>1$, bed fluidity would be less than that of a packed bed.

Using the data in Tables IV, V, and VI for a bed of 192 microns ($\mu$m) using 38 wt.% stainless steel beads at $H_A=300$ Oersteds (23875 A/m) (M=125 gauss), the flow resistance index had the following values as a function of superficial velocity:

| U(cm/s) | R |
| --- | --- |
| 0 | 1.85 |
| $U_{mf}=$ 5 | 1.78 |
| 0.5 $U_T=13$ | |
| 0.8 $U_T=21$ | 0.37 |
| $U_T=26$ | 0.00 |

where U=transition velocity. Thus, for this example, at superficial fluid velocities of 50% of U and greater, the flow resistance index is less than 1 and the bed has greater fluidity than a loosely packed fixed bed.

The experimental results shown in Tables IV, V and VI indicate that, due to interparticle magnetic forces, the fluidity of magnetically stabilized bed decreases with increasing particle magnetization, and decreasing bed expansion and superficial velocity. The angle of repose and the flow resistance index are good indications of fluidity in a magnetically stabilized bed relative to that of packed and fully fluidized beds of the same solids.

Example 4

Additional experiments were conducted in a transverse flow magnetically stabilized bed to illustrate the regions of increased fluidity as the transition from stabilized to bubbling bed is approached. Increased fluidity may be obtained by either increasing the superficial velocity of the fluidizing medium or decreasing the strength of the magnetic field (or using particles having reduced permanent magnetization).

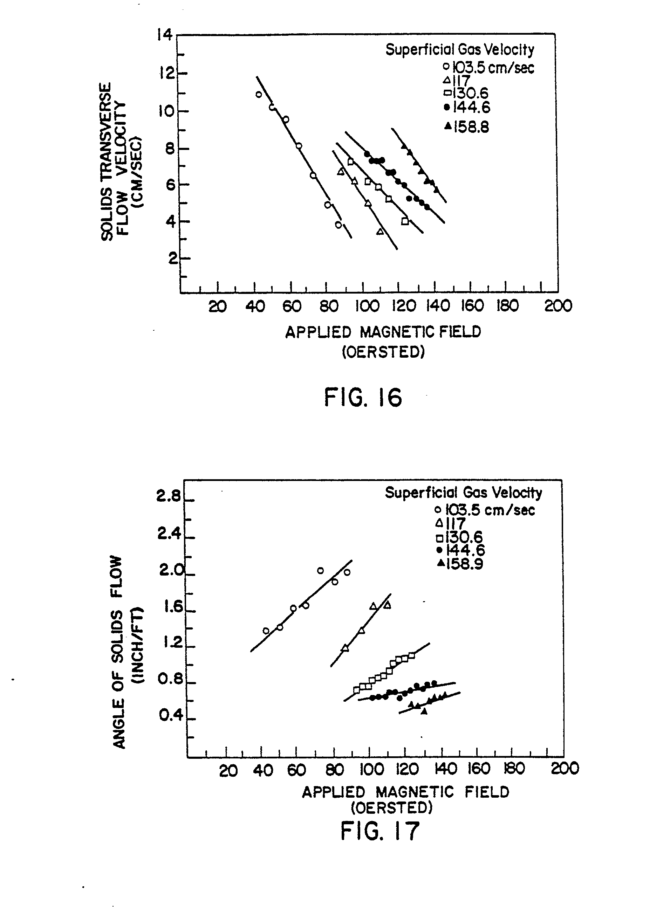

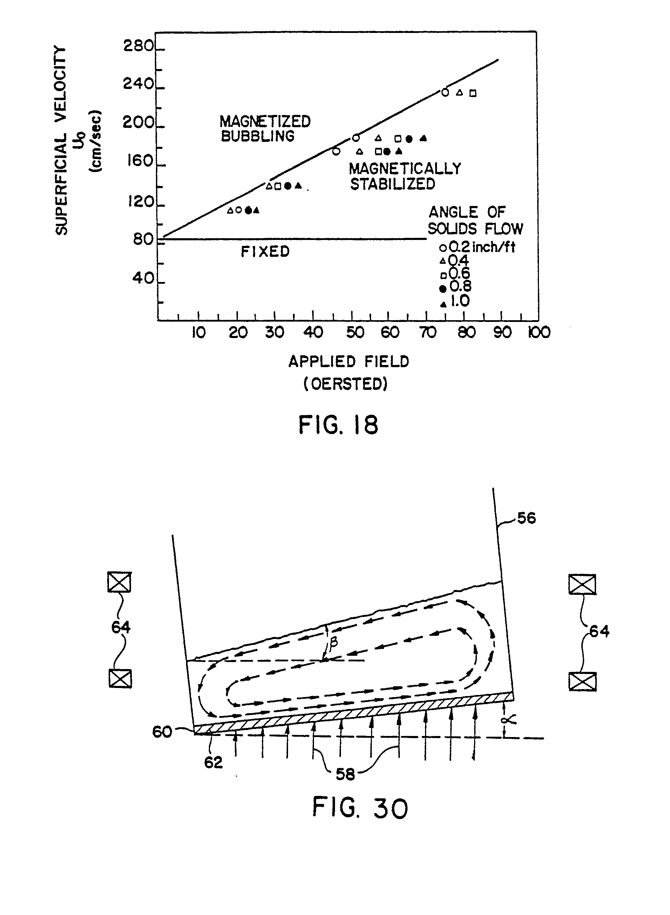

Figures 16 and 17 show the effects of magnetic field and superficial gas velocity on solids transverse flow velocity and angle of solids flow for composite particles of 70 wt.% stainless steel-alumina having −12 +20 U.S. sieve size in Figure 16, the solids transverse flow velocity (i.e. bed fluidity) is decreased by increasing the applied magnetic field or decreasing the superficial gas velocity. In Figure 17, the angle of solids flow relative to the horizontal increases as the applied magnetic field is increased and decreases as the superficial gas velocity is increased. Figure 18 is a crossplot of data similar to that shown in Figure 17 for steel spheres, −20 +30 U.S. sieve size, and shows that increased bed fluidity for transverse flow in magnetically stabilized beds is obtained when operating closer to the locus of transition at lower fluidity ratios.

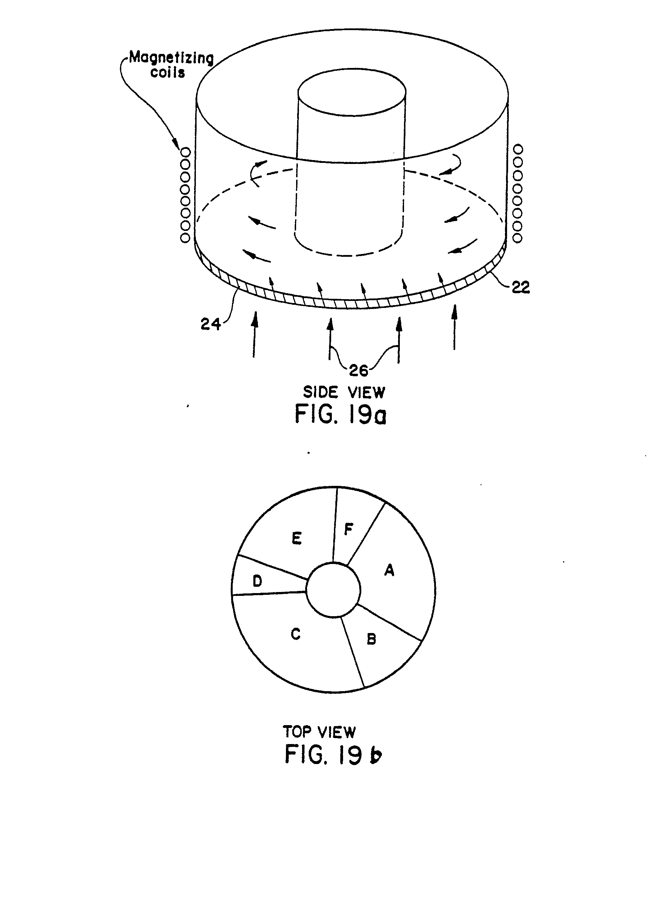

The following discussion and Examples 5—8 relate to the other preferred embodiment wherein the entering fluidizing fluid has a component of velocity in the transverse direction. In this embodiment, the process may be conducted in a variety of configurations. For example, in one configuration, the contacting vessel or zone is closed (i.e. no solids are removed from the vessel) such that the solids circulate essentially in the same direction in a closed loop within said vessel (i.e. the flow path of the solids starts and ends at the same point). While the flow path of the solids is not limited to any particular configuration (e.g. circular, rectangular, etc.), one configuration is shown in Figure 19a wherein a distributor grid 22 having slanted propulsion passages 24 through which fluidizing fluid 26 passes is arranged in the shape of a flat annulus such that the magnetically stabilized fluidized bed of solid rotates uniformly in a circle (i.e. like a carousel or circular conveyor) as shown by the arrows. If desired, the annular grid can be subdivided into a number of sections A—F as shown in Figure 19b such that a different fluidizing fluid or a fluid at different conditions can be introduced into the bed through the different sections. Accordingly, the magnetically stabilized bed

16

of solids rotating above the grid will be exposed sequentially to the different fluid streams. In this configuration the zone above the bed can be segmented as the grid, but radially displaced somewhat to allow for bed rotation, thereby permitting segregated withdrawal of the product streams from the various sections which correspond to the different grid segments.

It may be desirable to introduce, for example, inert purge gases into alternate sections of the grid, such as sections B, D, and F shown in Figure 19b so as to minimize mixing of the gases, introduced through sections A, C, or E. In this configuration, the vapor space above the bed should be segmented into only three sections, corresponding to A, C, and E, with the purge gases being collected in the A, C, and E product sections.

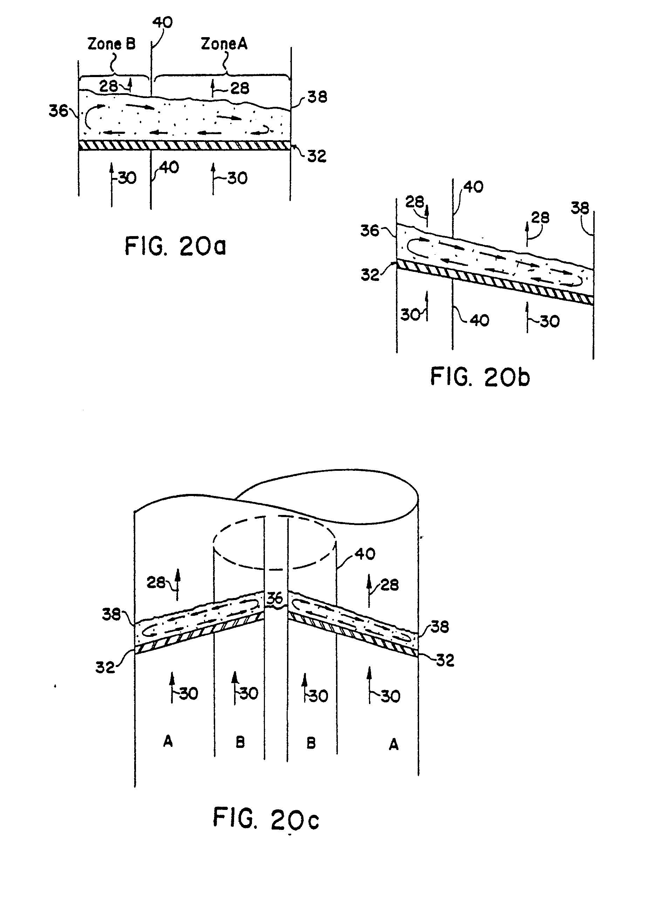

Figures 20a-c show yet another configuration of this preferred embodiment of the present process in which a bed comprising an essentially fixed (or constant) inventory of solids (or particles) is circulated within a contacting vessel such that the upper portion of the bed moves in a direction essentially opposite to that of the lower portion. As shown therein, circulation of the bed of solids is effected by inducing the lower portion of said bed to move in a direction transverse to the direction of flow of the fluidizing fluid 30 entering the bed through a distributor grid 32 having jets or propulsion passages 34 slanted in the direction of desired solids flow. The solids then contact and are deflected by one boundary of the contacting vessel 36 (also meant to include a boundary within vessel 36 such as a baffle) such that the upper portion of said bed will flow in a direction essentially opposite to the motion of the lower portion of the bed. The reverse flowing upper portion of the bed contacts and is deflected by the opposite boundary 38 of the vessel (also meant to include another boundary within the vessel such as a baffle) such that the upper portion becomes the lower portion of the bed. The arrows in Figures 20a-c illustrate the self-circulation of the bed within a closed loop thus described.

As used herein, the expressions "essentially opposite (or reverse) directions" or "direction essentially opposite (or reverse)" refer to one portion (or layer) of the bed moving in a direction opposite to that of another layer (or portion) of the bed; i.e. layers that are essentially mirror images moving in opposite directions. The direction of one layer may or may not be parallel to the direction of the other layer. The expression "essentially fixed or constant inventory of the solids" refers to maintaining essentially the same amount of solids in the separating medium by adding fresh solids to replace those removed with the product streams. Addition of fresh solids may be continuous or periodic to allow for variations in the solids inventory in the contacting vessel.

When grid 32 is horizontal as shown in Figure 20a, the reverse movement results from the gradient in bed height established by the flow of the lower portion of the bed. Thus, in this configuration, the total bed height is not uniform across the grid. When the grid is inclined, as shown in Figure 20b, the fluidizing fluid passing through the slanted jets transports the solids in the lower portion of the bed up the incline while the solids in the upper portion of the bed flow downward due to gravity. In this configuration, flows can be adjusted such that the bed height across the grid is essentially uniform, i.e., essentially no gradient in bed height. For the radial flow bed shown in Figure 20c, the flow of solids will be radially inward at the lower portion and radially outward at the upper portion of the bed.

As shown in Figures 20a-c, the magnetically stabilized fluidized bed may be divided into two or more zones by baffles 40 below as well as above the grid 32, enough clearance being provided to allow for unimpeded passage of the bed solids. Purge zones can be interposed to prevent undesirable contamination. In Figures 20a and 20b, the baffles 40 are straight across the plate, while in Figure 20c the baffles 40 are circular and separate an inner cylindrical region from an outer annular section. Use of a fluid-induced self-circulating magnetically stabilized fluidized bed permits the flow of solids from zone A to zone B and back to zone A without lift-lines, stand-pipes and cyclones. As such, entrainment and attrition of the solids are minimized.

The self-circulating bed configuration shown in Figure 20a, for example, may be used in a variety of applications, some of which are enumerated below:

(a) Catalytic reaction (in zone A, for example) and continuous regeneration or catalyst reconditioning (in zone B).

(b) A chemical reaction in zone A followed by solid regeneration in zone B; e.g. $SO_2$ removal in zone A by chemical reaction of the solid ($CuO$ or $CeO_2$) with $SO_2$ followed by regeneration with a reducing fluid or H in zone B.

(c) Adsorption (e.g. drying) in zone A followed by desorption in zone B.

(d) Heat exchange between fluid streams in zone A and in zone B using the circulating solid as a heat carrier.

(e) Particulate removal from the fluid in zone A followed by removal of these particulates (e.g. elutriation) from the circulating solids in zone B.

In another embodiment (not illustrated), a portion of the bed is provided with a conventional grid whereby the fluidizing fluid is introduced in the conventional manner (vertical or perpendicular to the grid). In Figure 20a, this could be zone B. In yet another embodiment (also not illustrated), a portion of the contacting zone need not be magnetically stabilized, i.e., ordinary fluidization with fluid bypassing, bed solids backmixing and fines elutriation will occur in this zone. A particularly preferred application of the above embodiments, alone or in combination, is the removal of fines or particulates from a fluid stream. Using Figure 20a to illustrate the second embodiment, a fluid stream containing particulates is introduced

17

into zone A (which is magnetically stabilized) wherein said particulates are captured therein. The captured particulates then circulate into zone B (which is not magnetically stabilized) and are removed therefrom by elutriation.

Example 5

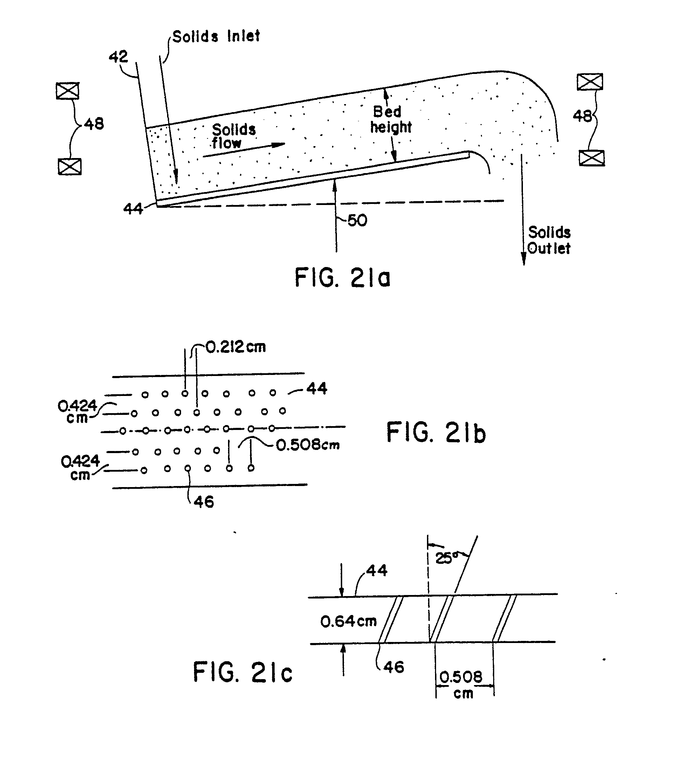

Composite particles of 70 wt.% stainless steel and 30 wt.% alumina were placed in a magnetically stabilized bed unit 42 2.54 cm wide and 68.6 cm long as shown in Figure 21a. The particles had an average particle size of 1300 microns ($\mu$m) and a density of 2.9 g/cm$^3$. The lower part of the unit contained a 0.64 cm thick aluminum distributor grid 44 perforated with holes 46, each hole being 0.061 cm in diameter and slanted 25° to the vertical in the direction of desired solids flow. The holes were arranged in rows 0.424 cm apart with one-half (i.e. 0.212 cm) spacing offset (brick-layer fashion). The centerline of the holes in each row was spaced 0.508 cm from the centerline of adjacent holes. Top and side views of the grid are shown in Figures 21b and 21c, respectively. The entire unit was placed in a vertical magnetic field supplied by two solenoidal electromagnets 48 connected in parallel, placed one above the other 15.5 cm apart, each made of 700 turns of No. 14 enamelled copper wire. The magnets were elliptical in design with inside dimensions of 22 cm by 94.5 cm. Continuous solids throughput was achieved by removing solids from the outlet of the bed and pneumatically conveying them to the inlet.

The distributor grid 44 was tilted at an angle of 2.89° such that the solids outlet was higher than the solids inlet. Fluidizing air 50 was passed through the grid at a superficial velocity of about 96 cm/sec and the magnetic field was set at about 103.5 Oersted (8236 A/m). The bed particles were visually observed to move up the inclined distributor against gravity, with an average bed height of 1.72 cm. In addition, the surface of the bed was inclined an additional 0.9° with respect to the distributor grid in the direction of solids flow, or a total of 3.79° with respect to the horizontal in the direction of solids flow.

The example shows that the air not only fluidized the bed but also provided the means to transport the particles in the bed upward against the solids gradient.

Example 6

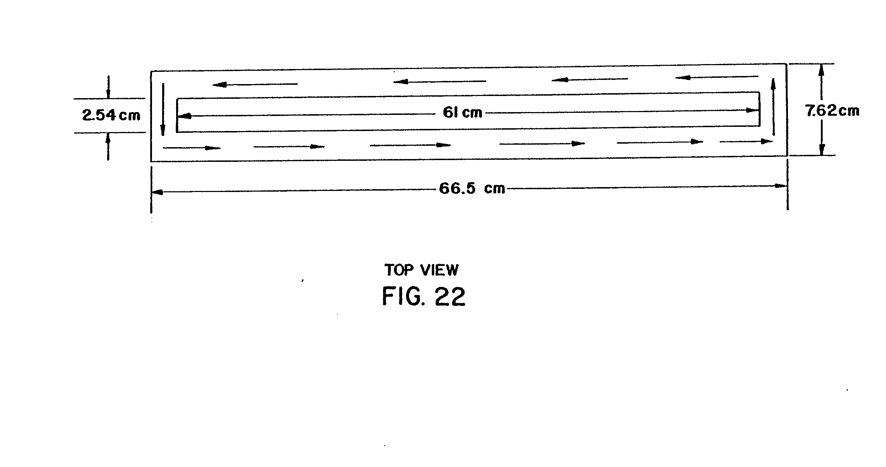

The stainless steel (SS)/alumina composites of Example 5 were placed in a rectangular unit 66.5 cm long and 7.62 cm wide as illustrated in Figure 22. The unit enclosed a rectangular center spacer 61 cm long and 2.54 cm wide such that the flow channel for the moving bed was about 2.54 cm wide. The unit was surrounded by the solenoidal magnets of Example 5 and the bed was fluidized by passing air through a grid having the same specifications as that used in Example 5.

Bed height was measured visually and the solids horizontal velocity at the top surface of the bed was determined by measuring the linear speed of a cork floating on the surface of the bed. The experiment was repeated with −20 +30 U.S. sieve steel spheres. The results from both experiments are shown in Table VII below:

TABLE VII

| Solids | Gas superficial velocity, cm/s | Magnetic field, oersted | (A/m) | Bed height, cm | Solids horizontal velocity, cm/s |
|---|---|---|---|---|---|
| SS/Alumina | 86.4 | 64.7 | (5149) | 1.27-1.91 | 2.0 |
| Composite | 89.3 | 70.6 | (5618) | 1.27-1.91 | 6.4 |
| Steel spheres | 109.4 | 23.52 | (1872) | 1.27 | 7.87 |
| | 117.9 | 29.4 | (2340) | 1.27 | 10.48 |

This example demonstrates that the fluidizing fluid can be used to induce and maintain solids circulation (as shown by the arrows in Figure 22) in a transverse flow magnetically stabilized bed while maintaining relatively stable bed height.

Example 7

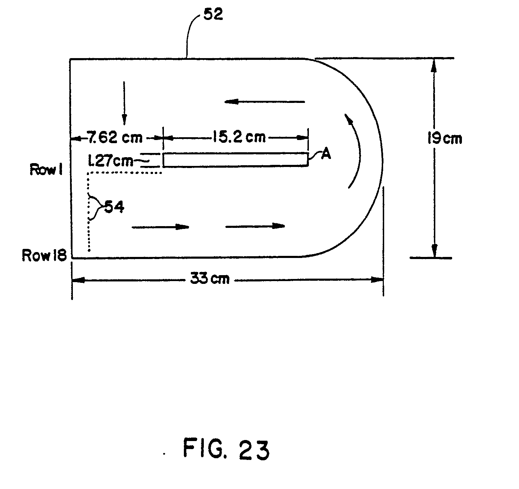

Several experiments were performed in a carousel-type magnetically stabilized bed in which composites of 70 wt.% stainless steel and 30 wt.% alumina were circulated horizontally over a distributor grid 52 having 18 rows of grid holes 54. A top view of the grid showing the direction of solids flow (as shown by the arrows) is illustrated in Figure 23. Grid 52 and holes 54 have the same arrangement and dimensions as the grid shown in Figures 21b and 21c except that the semicircle portion has grid holes spaced as follows (as measured from point A):

| Row | Angle between holes | Radii, cm |
|-----|---------------------|-----------|
| 1 | 30°55' | 0.848 |
| 2 | 21°46' | 1.273 |
| 3 | 16°40' | 1.697 |
| 4 | 13°28' | 2.121 |
| 5 | 11°17' | 2.545 |
| 6 | 9°43' | 2.969 |
| 7 | 8°31' | 3.393 |
| 8 | 7°35' | 3.818 |
| 9 | 6°50' | 4.242 |
| 10 | 6°13' | 4.666 |
| 11 | 5°42' | 5.09 |
| 12 | 5°16' | 5.514 |
| 13 | 4°53' | 5.938 |
| 14 | 4°34' | 6.363 |
| 15 | 4°17' | 6.787 |
| 16 | 4°2' | 7.211 |
| 17 | 3°49' | 7.635 |
| 18 | 3°36' | 8.059 |

The circulating bed is retained by transparent synthetic walls.

Two solenoidal electromagnets connected in series and placed one above the other 15.5 cm apart surround the entire unit. Each electromagnet is elliptical in design, made of 508 turns of No. 18 enamelled copper wire and has inside dimensions of 30 cm×105 cm.

In each experiment, air was introduced through the grid to fluidize the bed in the absence of a magnetic field. As the flow of air increased, the bed began to bubble at the minimum fluidization velocity. Some horizontal movement of solids across the grid was also observed. This was due to the transfer of kinetic energy from the fluidizing gas which has a velocity component in the direction of solids flow due to the slant of the grid holes. As the air velocity was increased further, violent bubbling occurred throughout the bed, making it difficult to determine if the solids were still being moved by the incoming air. As the magnetic field was applied and increased, the solids motion became more orderly and the horizontal movement of solids around the unit was observed. When the bed was stabilized, the solids appeared to move uniformly, decreasing in velocity as the magnetic field was increased. The solids velocity was measured visually by determining the time necessary for the solids to move a fixed distance along one of the straight sections. Similar measurements were made at several positions along the width of the flow channel to obtain the solids flow profile.

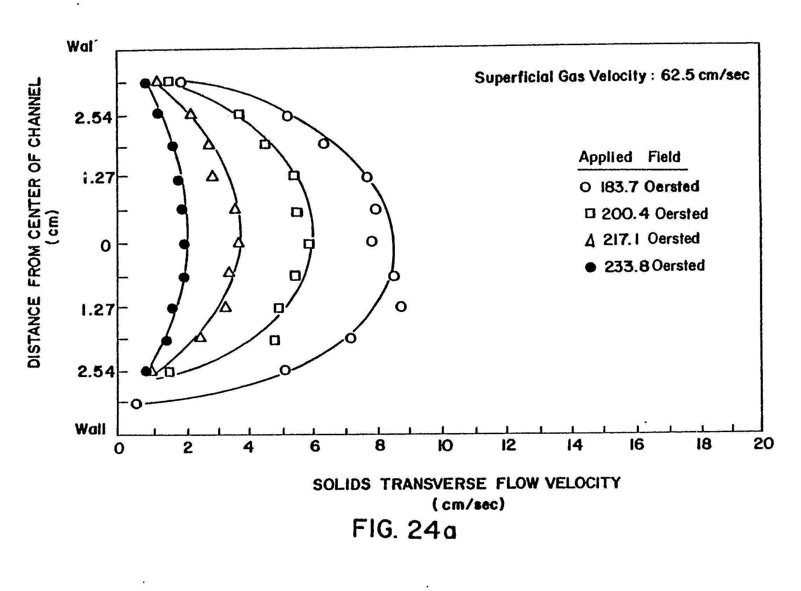

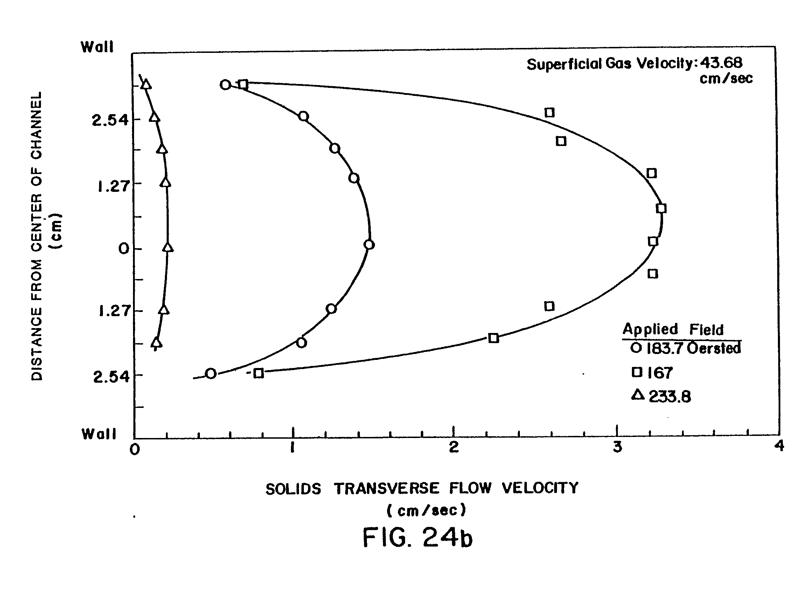

Figures 24a and 24b illustrate the effect of magnetic field on solids flow pattern at constant fluidizing air velocity for −20 +25 and −30 +35 U.S. Sieve composites, respectively. As shown therein, the solids velocity profiles maintain similar shape while the average solids velocity decreases with increasing magnetic field.

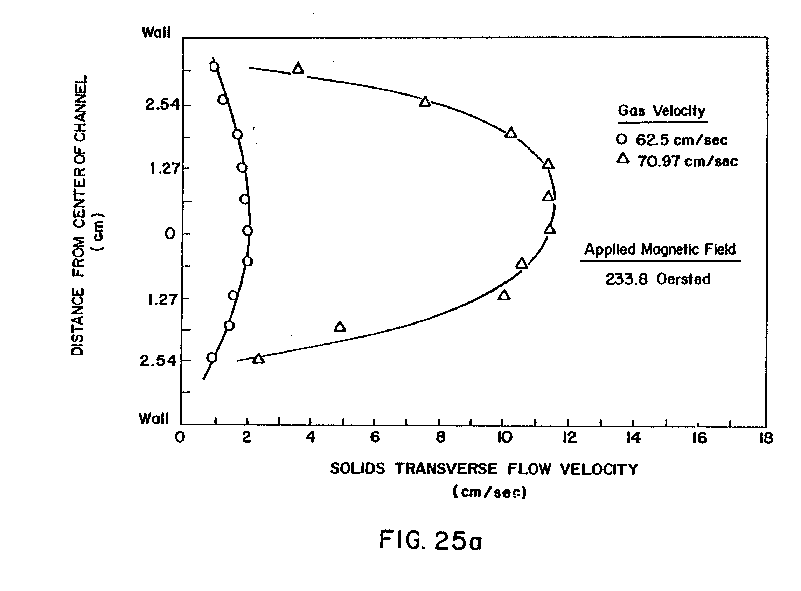

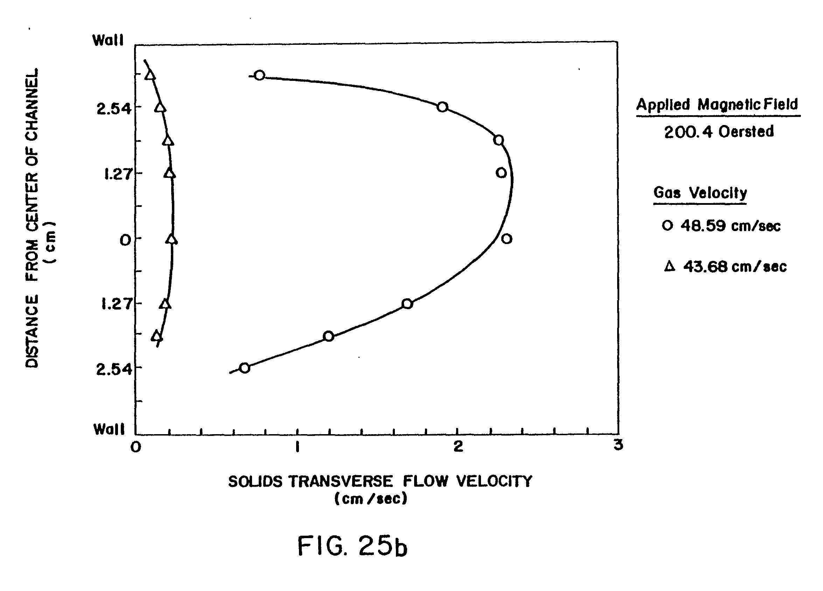

Figures 25a and 25b illustrate the effect of superficial gas velocity on solids flow pattern at constant magnetic field for −20 +25 and −30 +35 U.S. Sieve composites, respectively. As shown therein, the solids velocity increases with high superficial gas velocities.

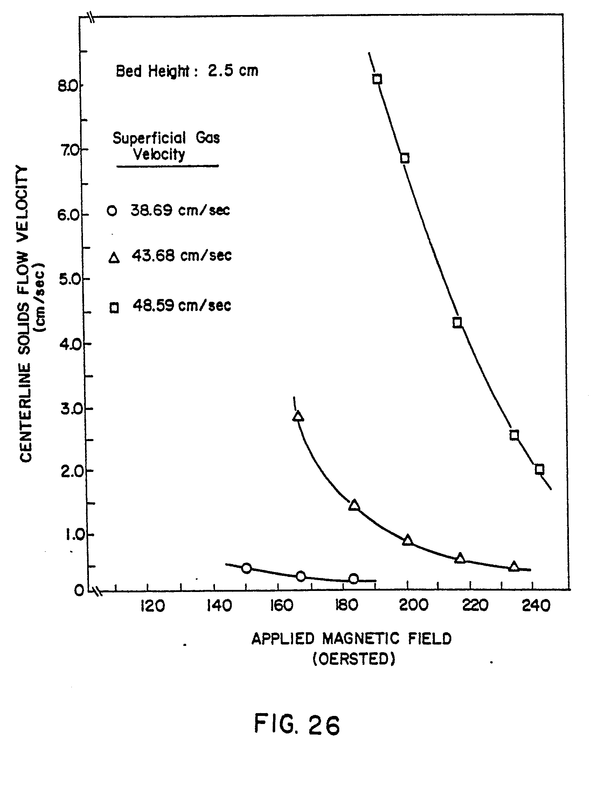

Figure 26 shows the combined effects of magnetic field and superficial gas velocity on solids flowrate for −30 +35 U.S. Sieve composites. Thus, the solids are transported more rapidly at increased velocity of the fluidizing fluid and decreased strength of the magnetic field. Both parameters, therefore can be used to control the solids flow rate.

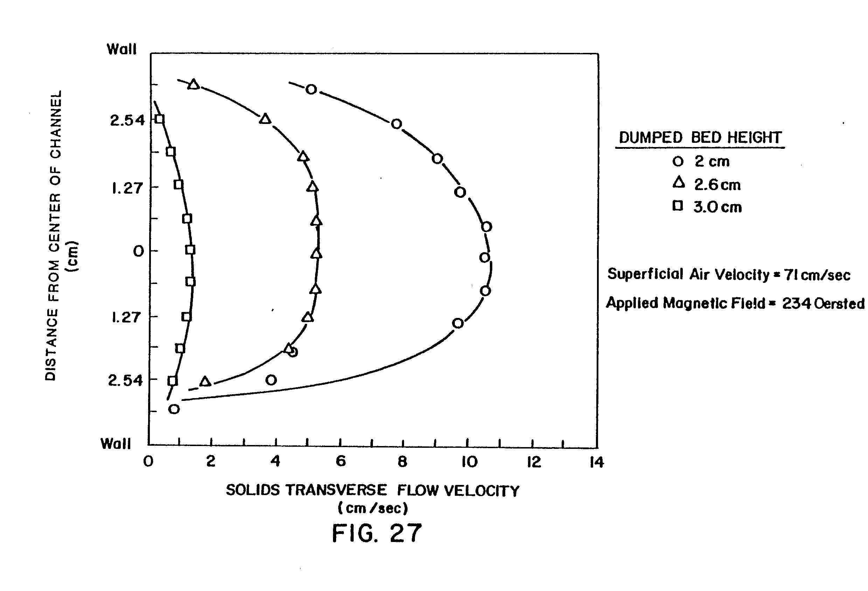

Figure 27 illustrates the effect of bed height on solids flow pattern at the top surface of the bed at constant fluidizing air velocity and magnetic field for −20 +25 U.S. Sieve composites. As shown therein, the solids velocity at the surface decreased with increasing dumped bed height. As used herein, dumped bed height refers to the initial depth of solids prior to introducing the fluidizing fluid into the bed.

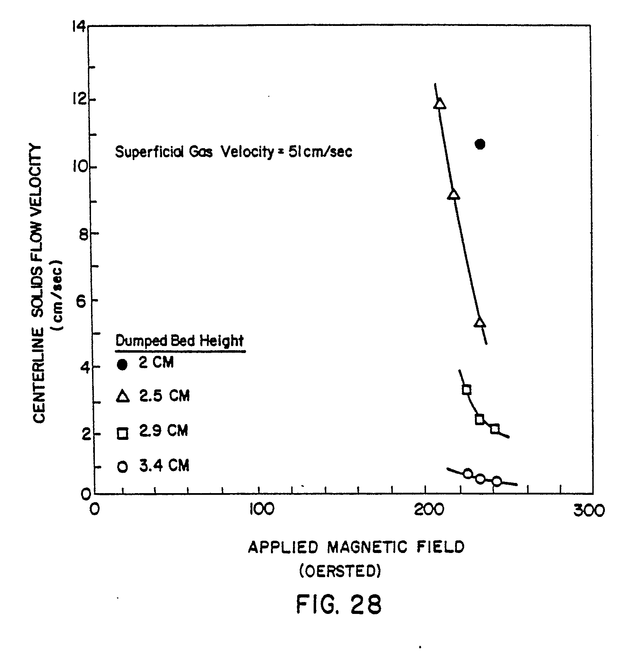

The combined effects of magnetic field and dumped bed height on solids flowrates at constant fluidizing gas velocity for −30 +35 U.S. Sieve composites is shown in Figure 28. As illustrated therein, the greater the initial bed height, the lower the solids velocity at the upper surface of the bed.

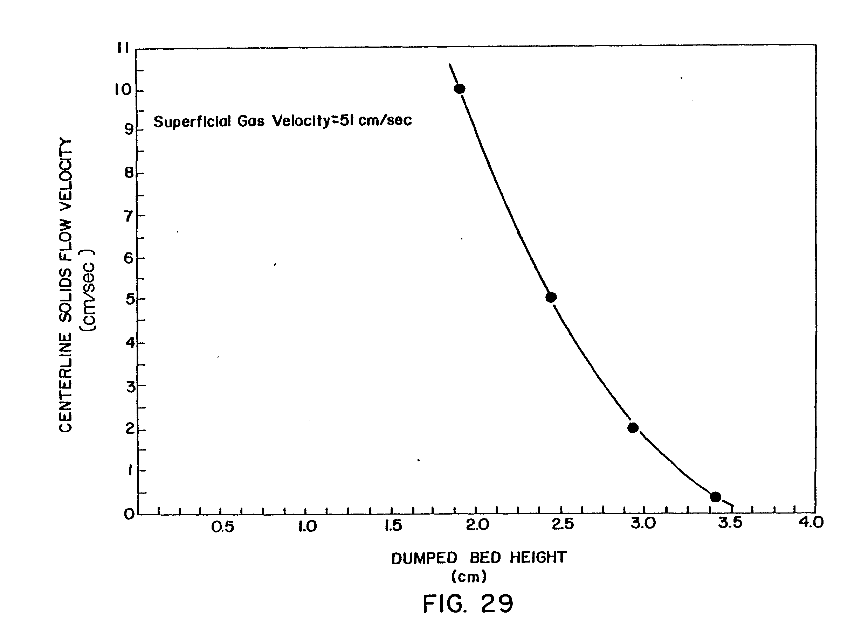

Figure 29 illustrates the effect of bed height on solids flowrate at constant superficial fluidizing gas velocity for −30 +35 U.S. Sieve composites.

Example 8

The stainless steel (SS) alumina composite particles of Example 5 were placed in a rectangular shaped vessel 56 measuring 2.54 cm wide and 32.5 cm long as shown in Figure 30. The particles were fluidized by air 58 passing through the distributor grid 60 described in Example 5 and illustrated in Figures 21b and 21c which contained holes 62 slanted at an angle of 25° to the vertical. As shown in Figure 30, the grid was tilted on an angle α with respect to the horizontal i.e., the grid was inclined in the direction of solids flow in the lower portion of the bed near or adjacent to the grid.

The entire unit was placed in a vertical magnetic field supplied by the two electromagnets 54 described in Example 5.

Passage of the air 58 through the slanted holes 62 caused the solids at the bottom of the bed, in the vicinity of the grid 60, to move in the direction that the holes were drilled. Solids at the top surface of the bed were observed to move in a direction essentially opposite to the solids flow near the grid. Thus, a fluid-induced self-circulating bed was established as shown by the arrows in Figure 30.

In addition to the distributor grid being tilted with respect to the horizontal, the top surface of the bed was inclined at an angle β with respect so the grid. Thus, the top surface of the bed was inclined at a total angle of α+β with respect to the horizontal.

Experiments were run at various conditions using the stainless steel/alumina composites and steel spheres of Example 6. The results of the experiments are shown in Table VIII.

TABLE VIII

| Particulate solids | Gas superficial velocity (cm/s) | Solids transverse flow velocity at top of bed (cm/s) | Average bed height (cm) | Applied magnetic field (oersted) (A/m) | | α | β |
|---|---|---|---|---|---|---|---|
| SS/Alumina Composite | 99.2 | 3.5 | 4.2 | 44 | (3501) | 1.9° | 1.8° |
| | 109.1 | 6.0 | 5.2 | 74 | (5889) | 1.9° | 3.3° |
| | 134.1 | 12.7 | 4.8 | 148 | (11777) | 1.9° | 6.0° |
| | 121.0 | 6.8 | 5.9 | 103 | (8196) | 1.9° | 3.0° |
| | 134.1 | 9.7 | 6.2 | 133 | (10584) | 1.9° | 3.6° |
| Steel spheres | 121.5 | 3.1 | 3.2 | 30 | (2387) | 1.9° | 1.5° |
| | 121.5 | 2.6 | 3.2 | 30 | (2387) | 4.3° | 0.3° |

These experiments demonstrate that the fluidizing fluid can be used to initiate and maintain the continuous operation of a self-circulating magnetically stabilized fluidized bed. In addition, the runs using steel spheres show that at constant superficial gas velocity and applied magnetic field, β decreases with increasing α. Normally, α will be less than 45 degrees and preferably less than 30 degrees. Typically, α will range from 0 to 20 degrees or less.

**Claims**

1. A process for contacting a fluid with solids under fluidized conditions wherein a bed of suspended magnetizable particles which is stabilized by a non-alternating magnetic means having a strength sufficient to suppress solids backmixing is contacted in a vessel with a fluidizing fluid which passes through the bed in an ascending manner and the particles are thereafter removed from contact with the fluid, and wherein at least a portion of the particles in the bed is passed in a direction transverse to the flow of the fluidizing fluid.

2. A process according to claim 1 which comprises operating the bed so that the ratio of the difference between the transition velocity and the operating velocity to the difference between the transition velocity and the normal minimum fluidization velocity ranges between −0.1 and +0.5.

3. A process according to claim 1 or 2 which comprises introducing the fluidizing fluid, which upon

**0 085 563**

introduction has a component of velocity in the transverse direction, into the lower portion of the bed and removing the fluid from the upper surface of the bed.

4. A process according to claim 3 which comprises passing the fluidizing fluid, before introduction into the bed, through a distribution means such that it is oriented to have the component of velocity in the transverse direction.

5. A process according to any one of claims 1—4 wherein the magnetizable particles are composites of non-ferromagnetic material, ferromagnetic material, ferrimagnetic material or mixtures thereof.

6. A process according to any one of claims 1—4 wherein the magnetizable particles are admixed with non-ferromagnetic material.

7. A process according to any one of claims 1—6 wherein the velocity profile of the bed particles is essentially uniform.

8. A process according to any one of claims 1—7 wherein the height profile of the bed particles is essentially uniform.

9. A process according to any one of claims 1—8 wherein the magnetic means are an externally applied magnetic field.

10. A process according to any one of claims 1—9 wherein the magnetic means are obtained using permanently magnetised particles.

**Patentansprüche**

1. Verfahren zum Kontaktieren eines Fluids mit Feststoffen unter Fluidisierungsbedingungen, wobei ein Bett von suspendierten magnetisierbaren Teilchen, das durch ein Magnetmittel von nicht wechselnder Feldstärke stabilisiert wird, dessen Stärke ausreicht, um eine Zurückmischung von Feststoffen zu unterbinden, in einem Gefäß mit einem Aufwirbelungsfluid kontaktiert wird, welches in aufsteigender Weise durch das Bett geleitet wird und bei dem die Teilchen anschließend aus dem Kontakt mit dem Fluid entfernt werden, und wobei zumindest ein Teil der Teilchen im Bett in Richtung quer zur Strömung des Wirbelfluids geleitet wird.

2. Verfahren nach Anspruch 1, dadurch gekennzeichnet, daß das Bett derart betrieben wird, daß das Verhältnis der Differenz zwischen der Übergangsgeschwindigkeit und der Betriebsgeschwindigkeit zur Differenz zwischen der Übergangsgeschwindigkeit und der normalen Minimumwirbelgeschwindigkeit von −0,1 bis +0,5 reicht.

3. Verfahren nach Anspruch 1 oder 2, dadurch gekennzeichnet, daß das Aufwirbelungsfluid in den unteren Teil des Bettes eingeleitet wird und bei der Einleitung eine Geschwindigkeitskomponente in Querrichtung besitzt, und daß das Fluid von der oberen Oberfläche des Bettes entfernt wird.

4. Verfahren nach Anspruch 3, dadurch gekennzeichnet, daß das Aufwirbelungsfluid vor dem Einleiten in das Bett durch eine Verteileinrichtung derart geleitet wird, daß es so ausgerichtet wird, daß es eine Geschwindigkeitskomponente in Querrichtung hat.

5. Verfahren nach einem der Ansprüche 1 bis 4, dadurch gekennzeichnet, daß die magnetisierbaren Teilchen Zusammensetzungen von nicht-ferromagnetischem Material, ferromagnetischem Material, ferrimagnetischem Material oder Mischungen davon sind.

6. Verfahren nach einem der Ansprüche 1 bis 4, dadurch gekennzeichnet, daß zu den magnetisierbaren Teilchen nicht-ferromagnetisches Material beigemischt ist.

7. Verfahren nach einem der Ansprüche 1 bis 6, dadurch gekennzeichnet, daß das Geschwindigkeitsprofil der Bett-Teilchen im wesentlichen gleichmäßig ist.

8. Verfahren nach einem der Ansprüche 1 bis 7, dadurch gekennzeichnet, daß das Höhenprofil der Bett-Teilchen im wesentlichen gleichmäßig ist.

9. Verfahren nach einem der Ansprüche 1 bis 8, dadurch gekennzeichnet, daß das Magnetmittel ein extern angelegtes Magnetfeld ist.

10. Verfharen nach einem der Ansprüche 1 bis 9, dadurch gekennzeichnet, daß das Magnetmittel durch Verwendung von permanent magnetisierbaren Teilchen erhalten wird.

**Revendications**

1. Procédé pour mettre en contact un fluide avec des matières solides dans des conditions fluidisées, dans lequel un lit de particules magnétisables en suspension, qui est stabilisé par des moyens magnétiques non alternatifs ayant une force suffisante pour supprimer le mélange en retour des matières solides, est mis en contact dans un récipient avec un fluide de fluidisation qui passe à travers le lit d'une manière ascendante et les particules sont ensuite soustraites du contact avec le fluide, et dans lequel au moins une partie des particules présentes dans le lit est dirigée dans une direction transversale vers l'écoulement du fluide de fluidisation.

2. Procédé selon la revendication 1, qui consiste à faire fonctionner le lit afin que le rapport de la différence entre la vitesse de transition et la vitesse de travail à la différence entre la vitesse de transition et la vitesse de fluidisation minimale normale soit compris entre −0,1 et +0,5.

3. Procédé selon la revendication 1 ou 2, qui consiste à introduire le fluide de fluidisation, qui possède, à l'introduction, une composante de vitesse dans la direction transversale, dans la partie inférieure du lit et à retirer le fluide de la surface supérieure du lit.

4. Procédé selon la revendication 3, qui consiste à faire passer le fluide de fluidisation, avant l'introduction dans le lit, dans des moyens de distribution afin qu'il soit orienté de façon à posséder la composante de vitesse dans la direction transversale.

5. Procédé selon l'une quelconque des revendications 1—4, dans lequel les particules magnétisables sont des composites de matière non ferromagnétique, de matière ferromagnétique, de matière ferrimagnétique ou de mélanges de celles-ci.

6. Procédé selon l'une quelconque des revendications 1—4, dans lequel les particules magnétisables sont en mélange avec une matière non ferromagnétique.

7. Procédé selon l'une quelconque des revendications 1—6, dans lequel le profil de vitesse des particules du lit est essentiellement uniforme.

8. Procédé selon l'une quelconque des revendications 1—7, dans lequel le profil de hauteur des particules du lit est essentiellement uniforme.

9. Procédé selon l'une quelconque des revendications 1—8, dans lequel des moyens magnétiques sont un champ magnétique appliqué extérieurement.

10. Procédé selon l'une quelconque des revendications 1—9, dans lequel les moyens magnétiques sont obtenus par l'utilisation de particules à magnétisation permanente.

FIG. 1

Labels in figure: 6A, 6B, TOP VIEW, 10, 2, 6, SIDE VIEW, 8, 4

FIG. 2

Labels in figure: SOLIDS IN, SOLIDS FLOW, SOLIDS TRANSVERSE VELOCITY PROFILE, BED HEIGHT PROFILE, $h_{inlet}$, $\gamma$, $h$, $h_{outlet}$, DISTRIBUTOR, $\alpha$, HORIZONTAL, SOLIDS OUT, GAS FLOW MAGNETIC FEILD

## FIG. 3

| $U_f$ (cm/sec) | $H_A$ (OER) | $Q_s$ (g/sec) |
|:---:|:---:|:---:|
| 42.3 | 145 | 179 |

Average bed height $\bar{H}$ (cm) vs. BELT TILT ANGLE, $\alpha$ (DEG)

## FIG. 4

| $U_f$ (cm/sec) | $Q_s$ (g/sec.) | $\alpha°$ |
|:---:|:---:|:---:|
| 42.3 | 118 | 0.56 |

Average bed height $\bar{H}$ (cm) vs. APPLIED FIELD, $H_A$ (OER)

2

# FIG. 5

FIG. 6

FIG. 7

FIG. 8

| | Applied Field (Oers) | Bed Tilt Angle deg. | Solids Rate g/sec. | Fluidization/ Transition Vel. |
|---|---|---|---|---|
| ● | 145 | 1.12 | 90 | 0.55 |
| ▲ | 175 | 1.12 | 100 | 0.57 |

## FIG. 9

SUPERFICIAL GAS VELOCITY
● 103.5 CM/SEC.
△ 117
□ 130.6
■ 144.6
▲ 158.9

ANGLE OF SOLIDS FLOW (INCH / FT)

APPLIED MAGNETIC FIELD (OERSTED)

# FIG. 10

## FIG. II

FIG. 12

FIG. 13

FIG. 14

# FIG. 15

FIG. 16

FIG. 17

14

FIG. 18

FIG. 30

Magnetizing coils

22

24

26

SIDE VIEW
FIG. 19a

E  F
D    A
C  B

TOP VIEW
FIG. 19 b

Zone B    40    Zone A

28    28

36    38

32

30    40    30

FIG. 20a

28    40    28

36    38

32

30    40    30

FIG. 20b

40

28    28

38    36

38

32    32

30    30    30    30

A    B    B    A

FIG. 20c

FIG. 2la

FIG. 2lb

FIG. 2lc

2.54 cm

61 cm

7.62 cm

66.5 cm

TOP VIEW

FIG. 22

0 085 563

52

7.62 cm

15.2 cm

19 cm

1.27 cm

A

Row 1

54

Row 18

33 cm

FIG. 23

Superficial Gas Velocity : 62.5 cm/sec

Applied Field
O 183.7 Oersted
□ 200.4 Oersted
△ 217.1 Oersted
● 233.8 Oersted

SOLIDS TRANSVERSE FLOW VELOCITY
( cm/sec )

FIG. 24a

Wall

2.54

1.27

0

1.27

2.54

Wall

DISTANCE FROM CENTER OF CHANNEL
( cm )

FIG. 24b

SOLIDS TRANSVERSE FLOW VELOCITY
( cm/sec )

FIG. 25a

FIG. 25b

FIG. 26

FIG. 27

FIG. 28

FIG. 29